# EUROPEAN PATENT SPECIFICATION

(11) **EP 2 696 110 B1**
(45) Date of publication and mention of the grant of the patent: **12.11.2014**
(21) Application number: 12194344.3
(22) Date of filing: 27.11.2012
(51) Int. Cl.: F16H 63/14, F16H 61/04, F16H 61/32

(54) **Automatic transmission device and vehicle including the same**
Automatikgetriebevorrichtung und Fahrzeug damit
Dispositif de transmission automatique et véhicule l'incluant

(30) Priority: 10.08.2012 JP 2012178447
(43) Date of publication of application: 12.02.2014
(73) Proprietor: Yamaha Hatsudoki Kabushiki Kaisha, Iwata-shi, Shizuoka 438-8501 (JP)
(72) Inventor: Minami, Kengo, Iwata-shi, Shizuoka 438-8501 (JP)
(74) Representative: Grünecker, Kinkeldey, Stockmair & Schwanhäusser

(56) References cited:
- EP-A2- 1 669 625
- JP-A- 59 133 854
- JP-A- 2007 120 723
- US-A1- 2006 065 068
- US-A1- 2007 240 955

## Description

The present invention relates to an automatic transmission device and a vehicle including the same.

Conventionally, a saddle type vehicle including a stepped transmission mechanism having a dog clutch is known. Recently, a vehicle for performing gear change of a transmission mechanism by use of an actuator such as an electric motor or the like is also known. Such vehicles do not require a rider to make a shift operation and thus can alleviate the load of operation of the rider.

A stepped transmission mechanism having a dog clutch includes movable gears which are movable in an axial direction of a main shaft and fixed gears which are not movable in the axial direction of the main shaft. The movable gears and the fixed gears each include an engaging portion formed of a protrusion, a hole or the like. Such engaging portions form a dog clutch. The movable gear is moved via a shift fork by a rotation of a shift cam. When the engaging portion of the movable gear and the engaging portion of the fixed gear are put into engagement with each other, the movable gear and the fixed gear are geared with each other, and thus the movable gear and the fixed gear are rotated integrally. At the time of gear change, the movable gear is moved in one direction of the axial direction of the main shaft. Along with this movement, the engaging portion of the movable gear is separated from the engaging portion of the fixed gear, with which the movable gear has been engaged, and another engaging portion of the movable gear is put into engagement with the engaging portion of another fixed gear. Namely, so-called dog drawing and dog fitting are performed. In the following description, separation of the engaging portion (e.g., protrusion) of the movable gear from the engaging portion (e.g., recess) of the fixed gear will be referred to as "dog drawing", and engagement of the engaging portion of the movable gear with the engaging portion of the fixed gear will be referred to as "dog fitting". The movable gears and the fixed gears will be referred to simply as "transmission gears".

Patent Literature 1 describes a motorcycle **according to the preamble of claim 1. Such a motorcycle includes** a stepped transmission mechanism having a dog clutch, which drives the clutch and the transmission mechanism by use of an actuator such as an electric motor or the like. With the motorcycle described in JP 2006-170229 A (= EP1669625A) (Patent Literature 1), when half clutch control of gradually engaging the clutch is finished, a shift actuator is actuated to return a shift arm to the neutral position.

For performing change of a combination of transmission gears (hereinafter, referred to as "gear change") continually, the shift arm at a gear position change position needs to be once returned to the neutral position and then moved to the gear position change position again. In order to perform the gear change with a short time, it is preferable to return the shift arm from the gear position change position to the neutral position as quickly as possible. However, with the technology described in Patent Literature 1, the shift arm starts to be returned to the neutral position at the time when the half clutch control is finished. Therefore, the time duration after the half clutch control is finished until the shift arm reaches the neutral position is long. This extends the time duration after the first gear change is finished until the next gear change is performed. Thus, it is difficult to perform the gear change continually within a short time.

In order to allow the gear change to be performed continually within a short time, the present inventor conceived starting to return the shift arm from the gear position change position to the neutral position at the same time as the dog fitting, before the half clutch control is finished. However, when the shift arm is moved toward the neutral position at the same time as the dog fitting, there are occasions where gear change is not performed successfully.

The present invention made in light of the above-described situation has an object of providing an automatic transmission device including a shift actuator, which can change the combination of transmission gears continually within a short time and also can engage a dog clutch with certainty at the time of change of the combination of transmission gears.

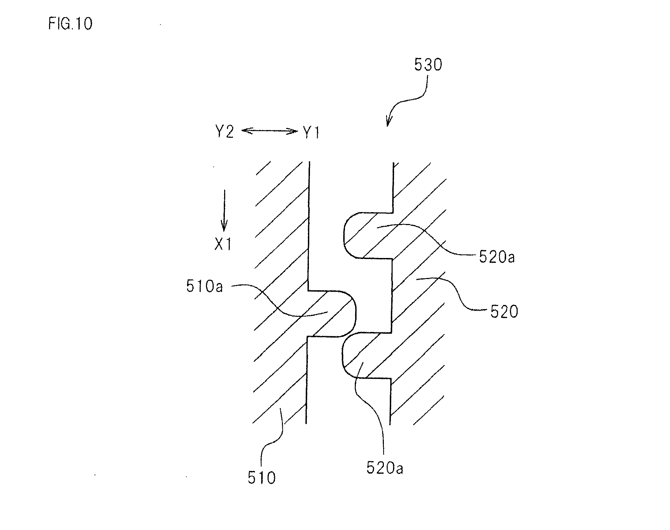

As a result of active studies, the present inventor noticed that the following phenomenon occasionally occurs. FIG. 10 shows an **example of a conventional** transmission gear 530 including a movable gear 510 and a fixed gear 520. As shown in FIG. 10, there are cases where, as a result of long-term use, an end surface of an engaging portion 510a of the movable gear 510 and an end surface of an engaging portion 520a of the fixed gear 520 are deteriorated, and corners thereof are rounded. For performing the gear change, the clutch is disengaged, and the movable gear 510 is moved in a direction of arrow Y1 in FIG. 10 by the rotation of the shift cam. As a result, the engaging portion 510a of the movable gear 510 and the engaging portion 520a of the fixed gear 520 start to be engaged with each other. Namely, dog fitting is started. When the clutch is gradually engaged from the start of the dog fitting, a torque of the engine is conveyed to the movable gear 510. Thus, the movable gear 510 is rotated in a direction of arrow X1 in FIG. 10. In the case where the corners of the engaging portion 510a and the engaging portion 520a are rounded, when the engaging portion 510a of the movable gear 510 and the engaging portion 520a of the fixed gear 520 are engaged with each other, the engaging portion 510a receives a reaction force in the opposite direction to the direction of arrow X1 and also a reaction force in a direction of arrow Y2 from the engaging portion 520a. Therefore, the movable gear 510 may be flipped in the direction of arrow Y2 by the fixed gear 520. If the shift arm starts to be returned to the neutral position at the same time as the dog fitting, the engaging portion 510a of the movable gear 510, which has been flipped in the direction of arrow Y2, cannot be engaged with the engaging portion 520a of the fixed gear 520 anymore because the force for moving the movable gear 510 in the direction of arrow Y1 has been extinct. Therefore, a problem may occur that the gear change cannot be performed. The present invention has been made based on the above knowledge of the present inventor. **An object of the present invention is achieved by an automatic transmission device according to claim 1.**

An automatic transmission device according to the present invention includes a clutch, located between an engine and a driving wheel, configured to convey and cut off a torque from the engine to the driving wheel; a clutch actuator configured to engage and disengage the clutch; a stepped transmission mechanism located between the clutch and the driving wheel and including a rotatable shift cam; a plurality of fixed gears including engaging portions and not movable along the rotation of the shift cam; movable gears including engaging portions engageable with the engaging portions of the fixed gears and movable so as to approach, or to be distanced from, the fixed gears along with the rotation of the shift cam; and a shift arm movable reciprocally between a neutral position and a gear position change position; in which when the shift arm is moved from the neutral position to the gear position change position, the shift cam is rotated, and change of gear position, by which a combination of movable gear and fixed gear engaged with each other is changed, is performed; a shift actuator configured to drive the shift arm; a clutch state detection device configured to detect a state of the clutch; an engagement detection device configured to detect engagement of the engaging portion of the movable gear and the engaging portion of the fixed gear; a clutch actuator control device configured to, at the time of the change of gear position, control the clutch actuator such that the clutch is disengaged, is put into a half clutch state, and then is engaged; and a shift actuator control device configured to control the shift actuator. At the time of the change of gear position, when, after the engaging portion of the movable gear is put into engagement with the engaging portion of the fixed gear, it is detected by the engagement detection device that the engagement has not been kept for a prescribed time duration while the clutch is in a half clutch state, the shift actuator control device is configured to give a driving force, continuously or again, to the shift arm so as to move the shift arm from the neutral position toward the gear position change position. When it is detected by the engagement detection device that the engagement of the engaging portion of the movable gear and the engaging portion of the fixed gear has been kept for the prescribed time duration while the clutch is in a half clutch state, the shift actuator control device is configured to return the shift arm to the neutral position.

With the automatic transmission device according to the present invention, when, at the time of change of gear position, the clutch is in a half clutch state and the engagement of the engaging portions of the movable gear and the fixed gear of the transmission mechanism is kept for the prescribed time duration, it is considered that the movable gear and the fixed gear are engaged with each other sufficiently. Therefore, even if the shift arm is returned to the gear position change position to the neutral position after a prescribed time duration passes, the engagement of the movable gear and the fixed gear is kept by a friction force which can be generated between the engaging portions. Owing to this, the shift arm can be returned to the neutral position quickly, and the time duration until the next change of gear position can be shortened. By contrast, when, at the time of the change of gear position, the friction clutch is in a half clutch state and the engagement of the engaging portions of the movable gear and the fixed gear of the transmission mechanism is not kept for the prescribed time duration, it is considered that the movable gear and the fixed gear are not engaged with each other sufficiently. However, in this case, the shift arm is given, continuously or again, a driving force for moving the shift arm toward the gear position change position. Therefore, the engaging portions of the movable gear and the fixed gear are put into engagement with each other shortly. Thus, the change of gear position can be performed with certainty.

According to an embodiment of the present invention, when it is detected by the engagement detection device that the engaging portion of the movable gear is put into engagement with the engaging portion of the fixed gear, the clutch actuator control device is configured to control the clutch actuator so as to engage the clutch, which has been disengaged, after putting the clutch into a half clutch state.

Owing to this, the half clutch control is started immediately when the dog fitting occurs. Thus, the time duration required for the gear change can be shortened.

According to an embodiment of the present invention, the clutch includes a driving-side rotation body to which the torque of the engine is conveyed and a subordinate-side rotation body capable of contacting, and being separated from, the driving-side rotation body, and is configured to be engaged and disengaged when the driving-side rotation body and the subordinate-side rotation body contact, and are separated from, each other. At the time of the change of gear position of the transmission mechanism, the clutch actuator control device is configured to perform half clutch control of causing the driving-side rotation body and the subordinate-side rotation body to approach each other at a first relative speed so that the driving-side rotation body and the subordinate-side rotation body rotate with respect to each other while being in contact with each other, and is configured to perform, after the half clutch control, engagement completion control of causing the driving-side rotation body and the subordinate-side rotation body to approach each other at a second relative speed, which is higher than the first relative speed, until the driving-side rotation body and the subordinate-side rotation body rotate integrally together. When it is detected by the engagement detection device that the engagement of the engaging portion of the movable gear and the engaging portion of the fixed gear has been kept for the prescribed time duration while the half clutch control is performed, the shift actuator control device is preferably configured to move the shift arm toward the neutral position before the half clutch control is finished.

Owing to this, the shift arm is moved toward the neutral position before the half clutch control is finished. Thus, the time duration until the next gear change can be shortened.

According to an embodiment of the present invention, when it is detected by the engagement detection device that the engagement of the engaging portion of the movable gear and the engaging portion of the fixed gear has been kept for the prescribed time duration while the half clutch control is performed, the shift actuator control device is configured to return the shift arm to the neutral position before the half clutch control is finished.

Owing to this, the shift arm is returned to the neutral position before the half clutch control is finished. Thus, the time duration until the next gear change can be further shortened.

According to an embodiment of the present invention, the automatic transmission device further includes a shift cam detection device configured to detect a rotation angle of the shift cam; and the engagement detection device is preferably configured to detects the engagement of engaging portion of the movable gear and the engaging portion of the fixed gear based on the rotation angle of the shift cam detected by the shift cam detection device.

Owing to this, the engagement of the engaging portions of the movable gear and the fixed gear can be detected easily.

According to an embodiment of the present invention, the automatic transmission device further includes a shift actuator detection device configured to detect an operation position of the shift actuator; and the engagement detection device is preferably configured to detect the engagement of engaging portion of the movable gear and the engaging portion of the fixed gear based on the operation position of the shift actuator detected by the shift actuator detection device.

Owing to this, the engagement of the engaging portions of the movable gear and the fixed gear can be detected easily.

According to an embodiment of the present invention, the automatic transmission device further includes a shift arm detection device configured to detect an operation position of the shift arm; and the engagement detection device is preferably configured to detect the engagement of engaging portion of the movable gear and the engaging portion of the fixed gear based on the operation position of the shift arm detected by the shift arm detection device.

Owing to this, the engagement of the engaging portions of the movable gear and the fixed gear can be detected easily.

According to an embodiment of the present invention, the shift actuator is an electric motor; the automatic transmission device further includes a current detection device configured to detecting a value of current supplied to the electric motor; and the engagement detection device is preferably configured to detect the engagement of engaging portion of the movable gear and the engaging portion of the fixed gear based on the value of current supplied to the electric motor detected by the current detection device.

Owing to this, the engagement of the engaging portions of the movable gear and the fixed gear can be detected easily.

According to an embodiment of the present invention, the automatic transmission device further includes a load detection device configured to detect a load applied to the shift arm; and the engagement detection device is preferably configured to detect the engagement of engaging portion of the movable gear and the engaging portion of the fixed gear based on the load applied to the shift arm detected by the load detection device.

Owing to this, the engagement of the engaging portions of the movable gear and the fixed gear can be detected easily.

According to an embodiment of the present invention, a vehicle including the automatic transmission device having the above-described structure is provided.

According to the present invention, a vehicle providing the above-described functions and effects can be provided.

As described above, according to the present invention, an automatic transmission device can be provided which can change the combination of transmission gears continually within a short time and also can engage a dog clutch with certainty at the time of change of the combination of transmission gears.

FIG. 1 is a side view of a motorcycle according to an embodiment of the present invention.
FIG. 2 is a structural view of a handle according to an embodiment of the present invention.
FIG. 3 is structural view of an engine according to an embodiment of the present invention.
FIG. 4 is cross-sectional view showing an internal structure of a power unit according to an embodiment of the present invention.
) FIG. 5A is a block diagram showing a part of elements of the motorcycle according to an embodiment of the present invention.
FIG. 5B is a side view showing a state where a shift arm of a transmission mechanism according to an embodiment of the present invention is moved to a gear position change position.
FIG. 6 schematically shows a change of a rotation angle of a shift cam, and dog drawing, dog bumping and dog fitting of transmission gears, according to an embodiment of the present invention.
FIG. 7 is a flowchart showing transmission control of the automatic transmission device according to an embodiment of the present invention.
FIG. 8A provides a timing diagram regarding the transmission control of the automatic transmission device, and a schematic cross-sectional view showing an operation of transmission gears, according to an embodiment of the present invention.
FIG. 8B is a timing diagram regarding the transmission control of the automatic transmission device according to an embodiment of the present invention.
FIG. 9 is a flowchart showing transmission control of the automatic transmission device according to another embodiment of the present invention.
FIG. 10 is a cross-sectional view showing a state where end surfaces of engaging portions of transmission gears are deteriorated **in a conventional automatic transmission device.**

### (First Embodiment)

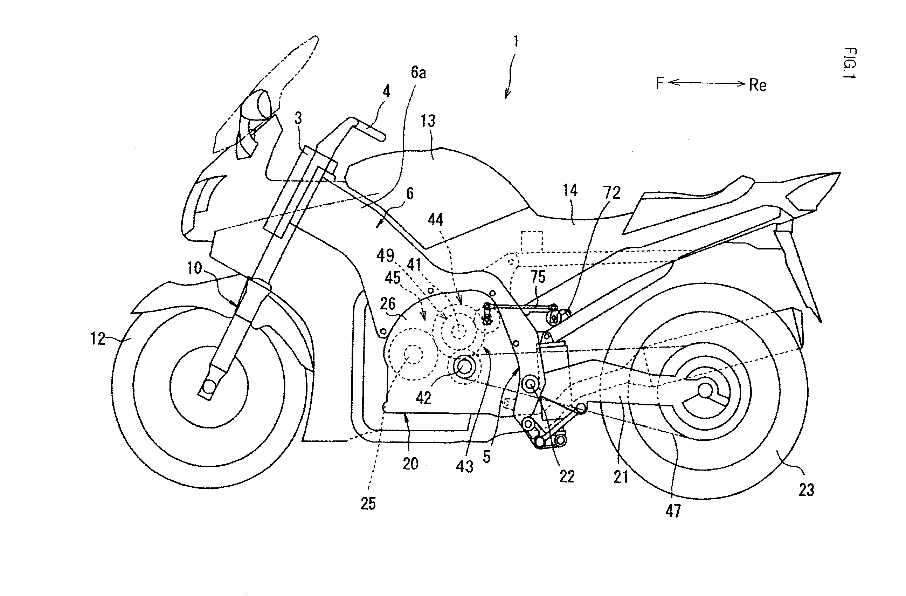

Hereinafter, an embodiment of the present invention will be described. As shown in FIG. 1, a vehicle according to this embodiment is a motorcycle 1. The motorcycle 1 is not limited to any specific type and may be of a so-called scooter type, a moped type, an off-road type, an on-road type or the like. A vehicle according to the present invention is not limited to a motorcycle, and may be a saddle type vehicle which a rider (user) rides astride or an equivalent thereof. Saddle type vehicles include, for example, an ATV (All Terrain Vehicle), a four-wheel buggy or the like in addition to a motorcycle. In FIG. 1, reference signs F and Re respectively represent "front" and "rear".

As shown in FIG. 1, the motorcycle 1 includes a head pipe 3 and a body frame 6. The body frame 6 includes two, i.e., left and right, frames 6a extending rearward from the head pipe 3. FIG. 1 shows only one frame 6a. A rear portion of the frame 6a extends downward. The rear portion of the frame 6a is connected to a rear arm bracket 5. The rear arm bracket 5 is connected to a front end portion of a rear arm 21 via a pivot shaft 22. The rear arm 21 is swingable upward and downward about the pivot shaft 22. At a rear end portion of the rear arm 21, a rear wheel 23 is supported. The rear wheel 23 is a driving wheel drivable by an engine 45 described later.

Above the frame 6a, a fuel tank 13 is located. Rearward to the fuel tank 13, a seat 14 on which the rider may sit is located.

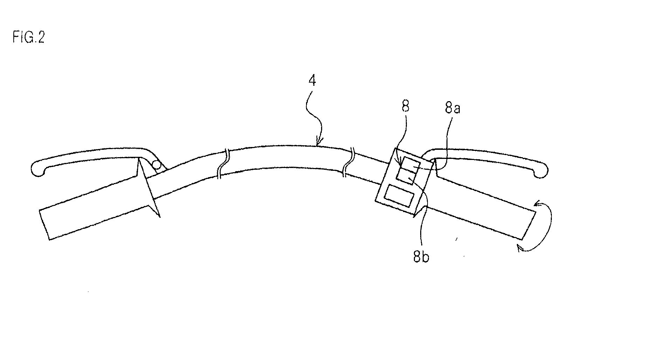

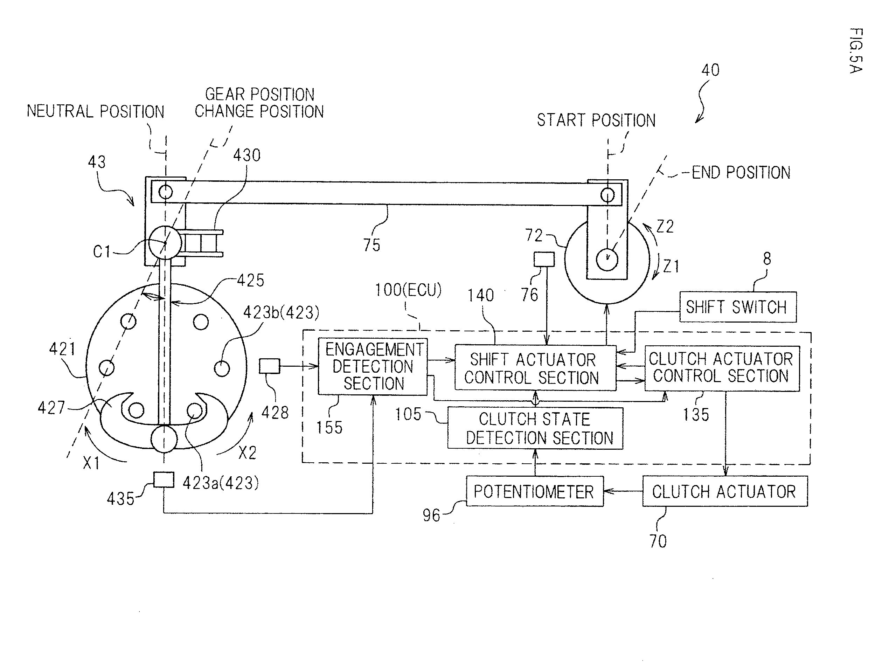

The head pipe 3 supports a steering shaft (not shown), and a handle 4 is provided on the steering shaft. As shown in FIG. 2, the handle 4 is provided with a shift switch 8. The shift switch 8 includes a shift-up switch 8a and a shift-down switch 8b, and can be used to increase or decrease a transmission gear 49 described later in the range from a neutral position to a maximum position (e.g., sixth gear) by a manual operation. The shift switch 8 outputs a gear change instruction to a shift actuator control section 140 (see FIG. 5A) described later. As described later, the shift actuator 140 performs change of gear position of a transmission mechanism 43 based on the gear change instruction.

At a lower portion of the steering shaft, a front fork 10 is provided. At a lower end of the front fork 10, the front wheel 12 is rotatably supported. The front wheel 12 is a subordinate wheel rotating in accordance with the running of the motorcycle 1.

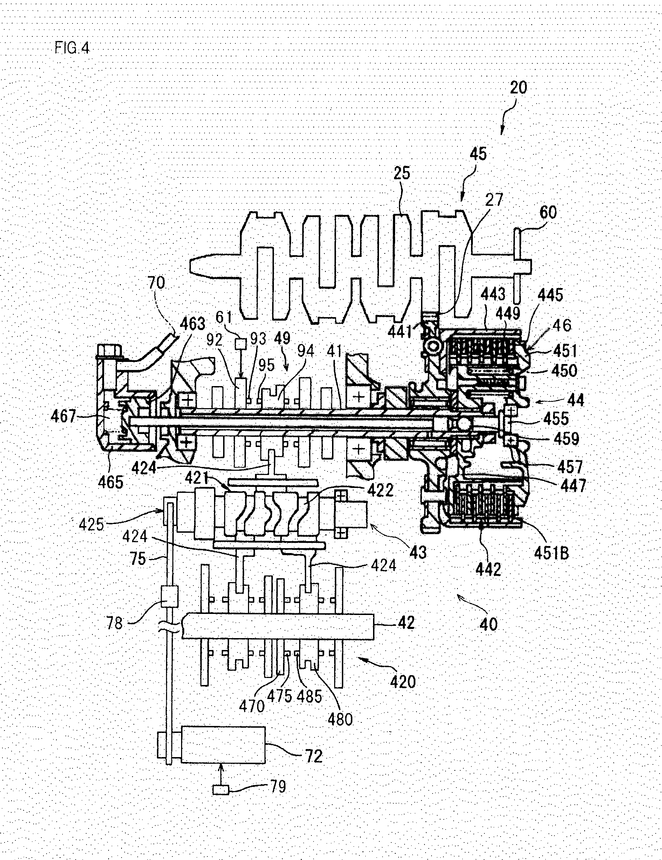

From the frame 6a and the rear arm bracket 5, a power unit 20 is suspended. FIG. 4 is a cross-sectional view showing an internal structure of the power unit 20. As shown in FIG. 4, the power unit 20 includes at least the engine 45 and an automatic transmission device 40. The engine 45 and the automatic transmission device 40 are integrally assembled to a crankcase 26 (see FIG. 1).

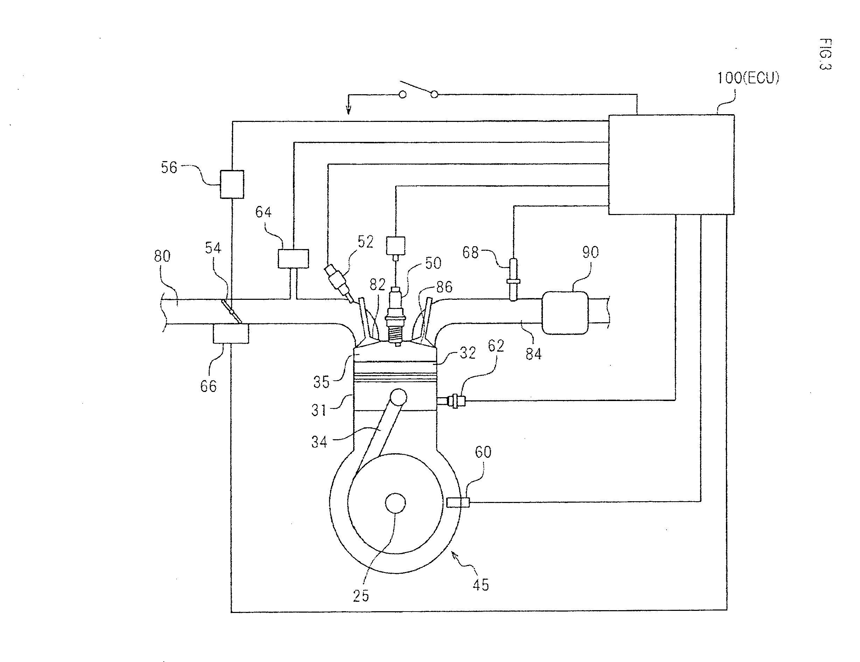

As shown in FIG. 3, the engine 45 includes a cylinder 31, a piston 32 reciprocating in the cylinder 31, a crankshaft 25, and a connection rod 34 for coupling the piston 32 and the crankshaft 25 to each other. The engine 45 includes a fuel injection valve 52, which is a fuel injection device for injecting fuel, and an ignition device 50 for igniting the fuel in a combustion chamber 35. The engine 45 includes a crankshaft rotation speed sensor 60 for detecting a rotation speed (number of rotations per unit time) of the crankshaft 25 and a temperature sensor 62 for detecting a temperature of the engine 45. Hereinafter, the rotation speed of the crankshaft 25 will be referred to as the "rotation speed of the engine 45". The fuel injection valve 52 is connected to a fuel tank (not shown). The temperature sensor 62 may detect the temperature of a part of the engine 45 (e.g., cylinder). In the case where the engine 45 is a water-cooled engine, the temperature sensor 62 may detect a temperature of the cooling water. Namely, the temperature sensor 62 may detect the temperature of the engine 45 directly or indirectly via the cooling water or the like.

The engine 45 includes an intake path 80 for introducing air to the combustion chamber 35, an intake valve 82 for opening or closing the intake path 80 and the combustion chamber 35 with respect to each other, a discharge path 84 for discharging exhaust gas from the combustion chamber 35, and a discharge valve 86 for opening or closing the combustion chamber 35 and the discharge path 84 with respect to each other. In this embodiment, the fuel injection valve 52 is located so as to inject the fuel to the inside of the intake path 80. The fuel injection valve 52 may inject the fuel directly to the inside of the combustion chamber 35. The engine 45 may include two types of fuel injection valves for injecting the fuel to the inside of the intake path 80 and to the inside of the combustion chamber 35 respectively.

In the intake path 80, a pressure sensor 64 is provided for detecting an intake pressure, which is an internal pressure of the intake path 80. In the intake path 80, a throttle valve 54 is located. The throttle valve 54 is an electronically controllable valve, a throttle opening of which is controlled by a throttle driving actuator 56. The throttle valve 54 adjusts the flow rate or the speed of air flowing in the intake path 80. The throttle valve 54 is provided with a throttle position sensor 66 for detecting the opening of the throttle valve 54. The throttle position sensor 66 outputs a throttle opening signal to an ECU 100.

In the discharge path 84, a catalyst 90 is provided. Also in the discharge path 84, an O₂ sensor 68 for detecting oxygen contained in the exhaust gas is provided as an air-to-fuel ratio sensor. The air-to-fuel ratio sensor may be any sensor which can detect at least whether the air-to-fuel ratio is in a rich region or a lean region. The O₂ sensor 68 according to this embodiment can detect whether the air-to-fuel ratio is in the rich region or the lean region. Needless to say, an element for linearly outputting an air-to-fuel ratio (linear A/F sensor), namely, a sensor for outputting the air-to-fuel ratio itself may be used as the air-to-fuel ratio sensor.

As shown in FIG. 4, the crankshaft 25 is coupled to a main shaft 41 via an automatic clutch 44. The main shaft 41 is located parallel to the crankshaft 25. The main shaft 41 is also located parallel to a drive shaft 42. The main shaft 41 is provided with a main shaft rotation speed sensor 61 for detecting a rotation speed (number of rotations per unit time) of the main shaft 41.

The automatic clutch 44 according to this embodiment includes a multi-plate friction clutch 46 and a clutch actuator 70. The friction clutch 46 is located between the engine 45 and the rear wheel 23. The friction clutch 46 conveys and cuts off a torque from the engine 45 to the rear wheel 23. The friction clutch 46 includes a clutch housing 443 and a clutch boss 447. Inside the clutch housing 443, a plurality of friction plates 445 is provided as a driving-side rotation body. The torque of the engine 45 is conveyed to the friction plates 445. Outside the clutch boss 447, a plurality of clutch plates 449 are provided as a subordinate-side rotation body. Each of the friction plates 445 rotates together with the clutch housing 443. By contrast, each of the friction plates 445 can be moved in an axial direction of the main shaft 41. The plurality of friction plates 445 is located along the axial direction of the main shaft 41. The friction clutch 46 may be a single-plate clutch instead of the multi-plate clutch.

Each of the clutch plates 449 faces each of the friction plates 445 adjacent thereto. Each of the clutch plates 449 rotates together with the clutch boss 447. By contrast, each of the clutch plates 449 can be moved in the axial direction of the main shaft 41. In this embodiment, the plurality of friction plates 445 and the plurality of clutch plates 449 form a plate group 442.

As shown in FIG. 4, a pressure plate 451 is located outward to the main shaft 41 in a vehicle width direction (rightward in FIG. 4). The pressure plate 451 is generally formed to be disc-shaped. In an outer portion of the pressure plate 451 in a radial direction thereof, a press portion 451 B protruding toward the plate group 442 is formed. The press portion 451B is located at a position facing the friction plate 445 which is located at the rightmost position in the plate group 442.

The friction clutch 46 is provided with a spring 450. The spring 450 urges the pressure plate 451 inward in the vehicle width direction (leftward in FIG. 4). Namely, the spring 450 urges the pressure plate 451 in a direction in which the press portion 451 B presses the plate group 442.

A central portion of the pressure plate 451 is in engagement with an end portion (right end portion in FIG. 4) of a push rod 455 via a bearing 457. Thus, the pressure plate 451 is rotatable with respect to the push rod 455. The main shaft 41 has a tubular shape. The other end portion (left end portion) of the push rod 455 is accommodated in the main shaft 41. In the main shaft 41, a spherical ball 459 is provided adjacent to the other end portion (left end portion) of the push rod 455. Also in the main shaft 41, a push rod 461 is provided adjacent to the ball 459.

A left end portion of the push rod 461 protrudes outward from the main shaft 41. At the left end portion of the push rod 461, a piston 463 is integrally provided. The piston 463 is guided by a cylinder main body 465 to be slidable in the axial direction of the main shaft 41.

The friction clutch 46 is disengaged or engaged by the clutch actuator 70. The clutch actuator 70 is an electric motor in this embodiment, but is not limited thereto. Driving the clutch actuator 70 allows the friction plates 445 and the clutch plates 449 to be close to, and thus to be in contact with, each other. Driving the clutch actuator 70 also allows the friction plates 445 and the clutch plates 449 to be separated from, and thus to be distanced from, each other. In this manner, the friction clutch 46 can be disengaged or engaged.

The clutch actuator 70 is provided with a potentiometer 96 (see FIG. 5A). The potentiometer 96 is a clutch actuator sensor for detecting a driving amount of the clutch actuator 70. The potentiometer 96 detects a rotation angle of the clutch actuator 70 (hereinafter, the rotation angle of the clutch actuator 70 will be referred to as the "position of the clutch actuator 70"). The clutch actuator 70 and the clutch actuator sensor may be integrated together. An example of such an integrated clutch actuator 70 is a servo motor capable of detecting a rotation angle and a rotation position.

When the clutch actuator 70 is driven, a space 467 enclosed by the piston 463 and the cylinder main body 465 is supplied with hydraulic oil. When the space 467 is supplied with the hydraulic oil, the piston 463 is pushed and moved rightward in FIG. 4. Thus, the piston 463 pushes the pressure plate 451 rightward in FIG. 4 via the push rod 461, the ball 459, the push rod 455 and the bearing 457. The rightward (in FIG. 4) pushing force applied to the pressure plate 451 via the piston 463 is changed based on the oil pressure of the hydraulic oil supplied to the space 467 of the cylinder main body 465. When the pushing force applied to the pressure plate 451 is increased, the press portion 451 B of the pressure plate 451 is separated from the friction plates 445. As a result, the friction clutch 46 is put into a disengaged state. In the state where the press portion 451B is separated from the plate group 442, each friction plate 445 and each clutch plate 449 are separated from each other, and a small gap is formed between each friction plate 445 and each clutch plate 449. Therefore, no friction force for conveying a torque of the engine 45 is generated between each friction plate 445 and each clutch plate 449.

For driving the clutch actuator 70 to engage the friction clutch 46, the pushing force applied to the pressure plate 451 via the piston 463 is decreased. As a result, the pressure plate 451 is moved leftward in FIG. 4 by the spring 450. When the pressure plate 451 is moved leftward in FIG. 4, the press portion 451B presses the plate group 442 leftward. As a result, the friction clutch 46 is put into a half clutch state. Namely, each friction plate 445 and each clutch plate 449 contact each other and rotate with respect to each other. Owing to this, the torque of the engine 45 is conveyed to the main shaft 41 via the friction plates 445 and the clutch plates 449. As seen from this, the "half clutch state" of the friction clutch 46 refers to a state where the torque of the engine 45 is conveyed to the main shaft 41 via the friction clutch 46 while each friction plate 445 and each clutch plate 449 of the friction clutch 46 rotate with respect to each other. Namely, the "half clutch state" of the friction clutch 46 refers to a state where the clutch housing 443 (friction plates 445) and the clutch boss 447 (clutch plates 449) are in contact with each other while the difference between the rotation speed of the clutch housing 443 (friction plates 445) and the rotation speed of the clutch boss 447 (clutch plates 449) (the difference will be referred to as the "clutch rotation speed difference of the friction clutch 46") is not zero.

When the clutch actuator 70 is driven to further decrease the pushing force applied to the pressure plate 451, the pressure plate 451 is moved further leftward in FIG. 4 by the spring 450. As a result, each friction plate 445 and each clutch plate 449 of the plate group 442 are put into pressure contact with each other. Namely, the friction clutch 46 is put into an engaged state, and each friction plate 445 and each clutch plate 449 rotate integrally together.

As described above, the pressure plate 451 moves in one direction or the other direction along the axial direction of the main shaft 41 in accordance with which of the pushing force applied to the pressure plate 451 by the driving of the clutch actuator 70 and the urging force of the spring 450 is larger. In accordance with such a movement, the friction clutch 46 is put into an engaged state, a half clutch state or a disengaged state.

At the crankshaft 25 of the engine 45, a gear 27 is integrally supported. At the main shaft 41, a gear 441 gearing with the gear 27 is supported. The gear 441 is rotatable with respect to the main shaft 41. The gear 441 is provided integrally to, for example, the clutch housing 443. Thus, the torque of the engine 45 is conveyed from the crankshaft 25 via the gear 441 to the clutch housing 443. The torque of the engine 45 is also conveyed from the clutch housing 443 to the clutch boss 447 by a friction force generated between the plurality of friction plates 445 and the plurality of clutch plates 449. The clutch boss 447 and the main shaft 41 rotate integrally together. Namely, the clutch boss 447 and the main shaft 41 do not rotate with respect to each other. Therefore, when the friction clutch 46 is engaged, the torque of the engine 45 is conveyed to the main shaft 41.

The push rod 455 is not limited to a push rod for pushing the pressure plate 451 rightward in FIG. 4 by a mechanism inserted through the main shaft 41. The push rod 455 may be a push rod for pulling the pressure plate 451 rightward in FIG. 4 by a mechanism provided outward to the pressure plate 451 in the vehicle width direction (rightward in FIG. 4).

Now, the automatic transmission device 40 according to this embodiment will be described. As shown in FIG. 4, the automatic transmission device 40 according to this embodiment includes at least the automatic clutch 44 and the transmission mechanism 43. The transmission mechanism is of a so-called dog clutch type and also is a stepped transmission mechanism. The transmission mechanism 43 is located on a power transmission path for conveying the torque of the engine 45 to the rear wheel 23 (see FIG. 1), between the friction plates 445 of the friction clutch 46 and the rear wheel 23. The transmission mechanism 43 includes transmission gears 49 and 420, a shift cam 421, a shift arm 425, shift forks 424, a shift actuator 72 and the like described later.

The main shaft 41 of the transmission mechanism 43 has a plurality of transmission gears 49 attached thereto. The plurality of transmission gears 49 include fixed gears 92 and a movable gear 94. A part of the fixed gears 92 each have an engaging portion 93. The fixed gears 92 are not movable in the axial direction of the main shaft 41. The movable gear 94 has engaging portions 95 respectively engageable with the engaging portions 93 of the fixed gears 92. The movable gear 94 is connected to a shift fork 424, and is movable to approach, or to be distanced from, the fixed gears 92 along with the rotation of the shift cam 421. By contrast, the drive shaft 42 of the transmission mechanism 43 has a plurality of transmission gears 420 attached thereto corresponding to the plurality of transmission gears 49. The plurality of transmission gears 420 includes fixed gears 470 and movable gears 480. The fixed gears 470 have engaging portions 475. The fixed gears 470 are not movable in the axial direction of the drive shaft 42. The movable gears 480 have engaging portions 485 respectively engageable with the engaging portions 475 of the fixed gears 470. The movable gears 480 are each connected to a shift fork 424, and are movable to approach, or to be distanced from, the fixed gears 470 along with the rotation of the shift cam 421.

Only a selected transmission gear 49 among the plurality of transmission gears 49 and only a selected transmission gear 420 among the plurality of transmission gears 420 are engageable with each other. At least either the transmission gears 49 among the plurality of transmission gears 49 which are not selected, or the transmission gears 420 among the plurality of transmission gears 420 which are not selected, are rotatable with respect to the main shaft 41 or the drive shaft 42. Namely, at least either the transmission gears 49 among the plurality of transmission gears 49 which are not selected, or the transmission gears 420 among the plurality of transmission gears 420 which are not selected, idle with respect to the main shaft 41 or the drive shaft 42. The conveyance of rotation between the main shaft 41 and the drive shaft 42 is performed only via the selected transmission gear 49 and the selected transmission gear 420 which are gearing with each other.

An outer circumferential surface of the shift cam 421 has a plurality of cam grooves 422 formed therein. To each of the cam grooves 422, each shift fork 424 is attached. As shown in FIG. 5A, the shift cam 421 has a plurality of protrusions 423 formed at an end portion in an axial direction thereof. In this embodiment, the protrusions 423 are formed along a perimeter of the shift cam 421 at an interval of 60 degrees. Namely, the rotation angles of the shift cam 421 for the first transmission gear through the sixth transmission gear are set at an interval of 60 degrees. The shift cam 421 is provided with a potentiometer 428 for detecting a rotation angle of the shift cam 421. Information on the rotation angle of the shift cam 421 detected by the potentiometer 428 is output to an engagement detection section 155.

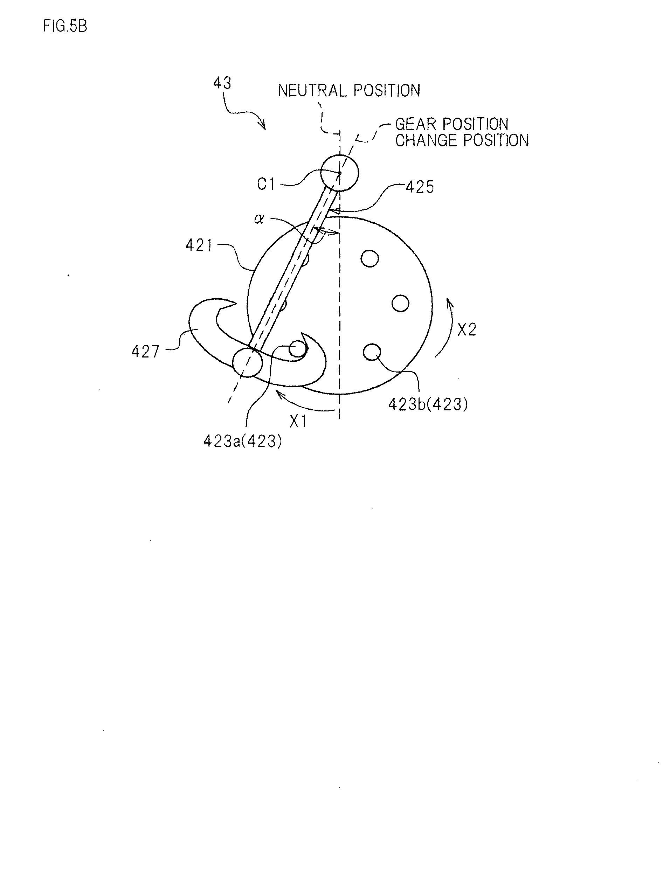

As shown in FIG. 5A, the shift arm 425 has a claw 427 engageable with the protrusions 423 of the shift cam 421. The shift arm 425 reciprocates between a neutral position and a gear position change position (see FIG. 5B). The shift arm 425 is provided with a spring 430. The spring 430 urges the shift arm 425 toward the neutral position. A shift rod 75 is coupled to the shift arm 425 and the shift actuator 72. The shift arm 425 and the shift actuator 72 are connected to each other via the shift rod 75. A length of the shift rod 75 can be adjusted. When the shift actuator 72 is rotated, the shift rod 75 is moved. Along the movement of the shift rod 75, the shift arm 425 is rotated. The shift arm 425 is provided with a potentiometer 435 for detecting a rotation angle of the shift arm 425. Information on the rotation angle of the shift arm 425 detected by the potentiometer 435 is output to the engagement detection section 155. The shift rod 75 is provided with a load cell (load sensor) 78 for measuring a load applied to the shift rod 75 (see FIG. 4). Information on the load applied to the shift rod 75 detected by the load cell 78 is output to the engagement detection section 155. The "gear position change position" refers to the following position. The shift arm 425 rotates the shift cam 421 by a prescribed angle, and as a result, the selected and engaged pair of transmission gears among the plurality of transmissions gears 49 and 420 are released from the engagement, and another pair of transmissions gears are put into engagement with each other. The "gear position change position" refers to a position at which such another pair of transmissions gears is put into engagement with each other.

Switching of the transmission gears 49 and 420 in the transmission mechanism 43, namely, the change of gear position of the transmission mechanism 43 is performed by driving the shift actuator 72 and thus rotating the shift cam 421. The shift actuator 72 is an electric motor 72 in this embodiment, but is not limited thereto. A change of the rotation angle of the shift actuator 72 (hereinafter, the rotation angle of the shift actuator 72 will be referred to as the "position of the shift actuator 72") gives a driving force to the shift arm 425. This will be described specifically. For the shift actuator 72, a start position is preset. The shift actuator 72 is controlled on the basis of the start position. A change of the position of the shift actuator 72 from the start position to an end position gives a driving force to the shift arm 425 for moving the shift arm 425 from the neutral position toward the gear position change position. A change of the position of the shift actuator 72 from the end position to the start position gives a driving force to the shift arm 425 for moving the shift arm 425 from the gear position change position toward the neutral position. The shift actuator 72 is provided with a current detection circuit 79 (see FIG.4) for detecting a value of current supplied to the shift actuator 72. Information on the value of current detected by the current detection circuit 79 is output to the engagement detection section 155.

The shift actuator 72 is provided with a potentiometer 76. The potentiometer 76 is a shift actuator sensor for detecting a driving amount of the shift actuator 72. The potentiometer 76 detects the position of the shift actuator 72. The potentiometer 76 outputs the detected position of the shift actuator 72 to the shift actuator control section 140 (see FIG. 5A). The shift actuator 72 and the shift actuator sensor may be integrated together. An example of such an integrated shift actuator 72 is a servo motor capable of detecting a rotation angle and a rotation position.

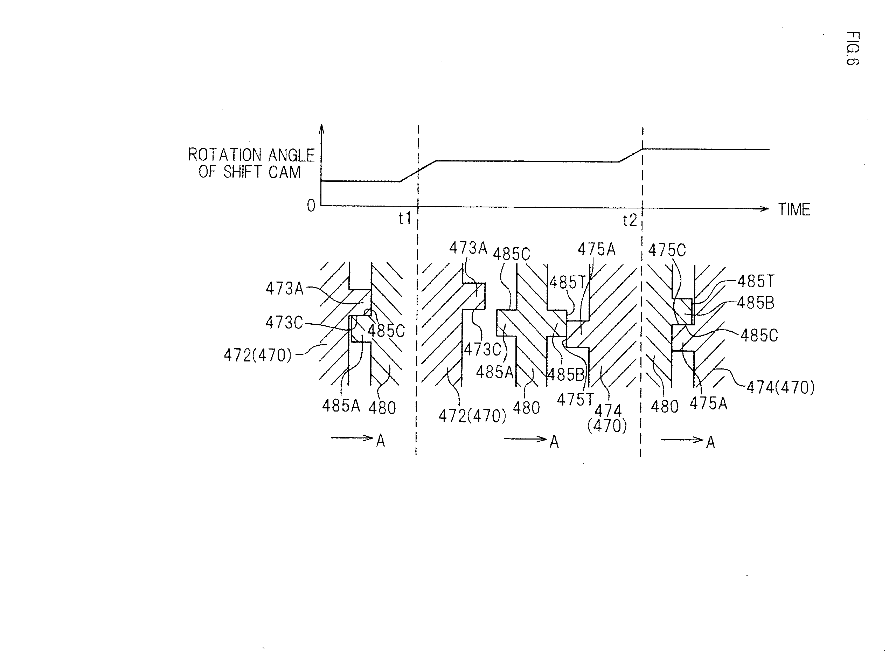

FIG. 6 schematically shows a change of the rotation angle of the shift cam 421, and dog drawing, dog bumping and dog fitting of the transmission gears 49 and 420. In the following description, it is assumed that the movable gear 94 among the transmission gears 49 is not moved, and the movable gears 480 among the transmission gears 420 are moved. Among the fixed gears 470, a gear engaged with a movable gear 480 before the gear change will be referred to as the "fixed gear 472", and a gear engaged with a movable gear 480 after the gear change will be referred to as the "fixed gear 474". The movable gear engaged with the fixed gear 472 before the gear change and the movable gear engaged with the fixed gear 474 after the gear change may be the same (in this case, the movable gear 480) or different. In this embodiment, the movable gear engaged with the fixed gear 472 before the gear change and the movable gear engaged with the fixed gear 474 after the gear change are the same.

When the shift actuator 72 is driven to move the shift arm 425 from the neutral position to the gear position change position (see FIG. 5B), the shift cam 421 is rotated. Along with the rotation of the shift cam 421, the movable gear 480 moves in a direction of arrow A in FIG. 6 (axial direction of the drive shaft 42). Namely, the movable gear 480 is moved so as to be distanced from the fixed gear 472, with which the movable gear 480 was engaged before the gear change, and to approach the fixed gear 474 to be engaged after the gear change. Before the gear change, the torque of the engine 45 is mainly conveyed from the fixed gear 472 to the movable gear 480, and a side surface 485C of an engaging portion 485A of the movable gear 480 and a side surface 473C of an engaging portion 473A of the fixed gear 472 are pressed to each other. The disengagement of the friction clutch 46 at the time of gear change weakens the torque, and thus the pushing force of the side surface 485C of the engaging portion 485A of the movable gear 480 and the pushing force of the side surface 473C of the engaging portion 473A of the fixed gear 472 are weakened. This weakens the engaging force of the engaging portion 485A and the engaging portion 473A, and thus the movable gear 480 is movable in the direction of arrow A in FIG. 6 more easily. In the middle of the rotation of the shift cam 421 (see time t1), the engaging portion 485A, which has been sliding on the side surface 473C of the engaging portion 473A, is separated from the side surface 473C. Namely, the movable gear 480 is separated from the fixed gear 472. Such separation of the engaging portion 485A of the movable gear 480 and the engaging portion 473A of the fixed gear 472, which were engaged with each other before the gear change, is referred to as "dog drawing". As the driving force of the shift actuator 72 is larger, the dog drawing is performed more easily, and thus the rotation speed of the shift cam 421 is higher.

After the dog drawing is finished at time t1, the movable gear 480 is moved further in the direction of arrow A in FIG. 6. Then, the movable gear 480 and the fixed gear 474 are put into engagement with each other. Namely, a tip 485T of an engaging portion 485B of the movable gear 480 is moved to the right of a tip 475T of an engaging portion 475A of the fixed gear 474. This is referred to as "dog fitting". Typically, a side surface 485C of the engaging portion 485B and a side surface 475C of the engaging portion 475A contact each other.

In the meantime, the movable gear 480 and the fixed gear 474 rotate with respect to each other. Therefore, at the time of dog fitting, the positions in the up-down direction (see FIG. 6) of the engaging portion 475A and the engaging portion 485B are not necessarily deviated with respect to each other. Namely, the positions of the engaging portion 475A and the engaging portion 485B are not necessarily deviated with respect to each other in the rotation direction. Therefore, there may be a case where at least a part of the tip 475T of the engaging portion 475A faces at least a part of the tip 485T of the engaging portion 485B. In such a case, the tip 485T of the engaging portion 485B and the tip 475T of the engaging portion 475A bump into each other. This is referred to as "dog bumping".

In this embodiment, the shift actuator control section 140 described later, upon receiving a shift-up instruction from the shift switch 8, moves the shift actuator 72 from the start position to the end position in a direction of arrow Z1 in FIG. 5A. As a result, the shift arm 425 is rotated in a direction of arrow X1 in FIG. 5A about a rotation center C1. When the shift actuator 72 is driven to rotate the shift arm 425, the claw 427 is put into engagement with one of the protrusions 423 of the shift cam 421, i.e., the protrusion 423a. As a result, the shift cam 421 is also rotated in the direction of arrow X1 in FIG. 5A. By the rotation of the shift cam 421, each of the plurality of shift forks 424 is guided by the cam groove 422 to move in the axial direction of the main shaft 41. As a result, the movable gear 94 or the movable gears 480 connected to the shift fork(s) 424 are moved, and the movable gear 94 and a fixed gear 92 are put into engagement with each other, or a movable gear 480 and a fixed gear 472 are put into engagement with each other. When, as shown in FIG. 5B, the shift arm 425 is rotated by a prescribed angle α from the neutral position to the gear position change position, the gear position is changed (see time t2 in FIG 6). Namely, a combination of movable gear and fixed gear engaged with each other, among the plurality of transmission gears 49 and transmission gears 420, is changed in accordance with the rotation angle of the shift cam 421. Only one pair of transmission gears corresponding to the combination are respectively put into a secured state by a spline with respect to the main shaft 41 and the drive shaft 42. Thus, a gear position in the transmission mechanism 43 is determined. As a result, the conveyance of rotation is performed between the main shaft 41 and the drive shaft 42 at a prescribed deceleration ratio via the transmission gear 49 and the transmission gear 420. Thus, the drive shaft 42 is rotated. When the drive shaft 42 is rotated, the torque is conveyed by a power conveyance mechanism 47 (see FIG. 1) for connecting the drive shaft 42 and the rear wheel (see FIG. 1), and thus the rear wheel is rotated.

When the change of gear position is finished, the shift actuator control section 140 moves the shift actuator 72 from the end position to the start position in a direction of arrow Z2 in FIG. 5A. As a result, the shift arm 425 is rotated in a direction of arrow X2 in FIG. 5A. When the shift arm 425 is rotated, the claw 427 and the protrusion 423a are released from the engagement. Since the claw 427 of the shift arm 425 is not engaged with any of the protrusions 423 of the shift cam 421, the shift cam 421 is not rotated even when the shift arm 425 is rotated in the direction of arrow X2 in FIG. 5A. When the shift arm 425 is rotated from the gear position change position to the neutral position, the claw 427 becomes engageable with another one of the plurality of protrusions 423 of the shift cam 421, namely, the protrusion 423b. The shift actuator control section 140, upon receiving a shift-down instruction from the shift switch 8, rotates the shift actuator 72 in the direction of arrow Z2 in FIG. 5A and thus rotates the shift arm 425 in the direction of arrow X2 in FIG. 5A. When the change of gear position is finished, the shift actuator control section 140 rotates the shift actuator 72 in the direction of arrow Z1 in FIG. 5A and thus rotates the shift arm 425 in the direction of arrow X1 in FIG. 5A. After the clutch actuator 70 starts disengaging the friction clutch 46, the shift actuator 72 rotates the shift arm 425 to switch the transmission gears 49 and 420 of the transmission mechanism 43.

The automatic transmission device 40 includes the ECU (Electric Control Unit) 100 as a control device for controlling the shift actuator 72 and the like. As shown in FIG. 5A, the ECU 100 includes the shift actuator control section 140, a clutch actuator control section 135, a clutch state detection section 105, and the engagement detection section 155.

The engagement detection section 155 can detect the engagement of the engaging portion 93 of the movable gear 94 and the engaging portion 95 of the fixed gear 92 among the transmission gears 49, and the engagement of the engaging portion 485 of the movable gear 480 and the engaging portion 475 of the fixed gear 470 among the transmission gears 420, namely, can detect dog drawing, dog bumping and dog fitting. Hereinafter, a case where the engaging portion 485 of the movable gear 480 and the engaging portion 475 of the fixed gear 470 are put into engagement with each other will be described. The engagement detection section 155 can detect whether the engagement of the engaging portion 485 of the movable gear 480 and the engaging portion 475 of the fixed gear 470 is kept for a prescribed time duration or not. In this embodiment, the engagement detection section 155 can detect the engagement of the engaging portion 485 of the movable gear 480 and the engaging portion 475 of the fixed gear 470 based on the rotation angle of the shift cam 421 detected by the potentiometer 428 provided to the shift cam 421. The engagement detection section 155 can detect the engagement of the engaging portion 485 of the movable gear 480 and the engaging portion 475 of the fixed gear 470 also based on the position of the shift actuator 72 detected by the potentiometer 76 provided to the shift actuator 72. The engagement detection section 155 can detect the engagement of the engaging portion 485 of the movable gear 480 and the engaging portion 475 of the fixed gear 470 also based on the rotation angle of the shift arm 425 detected by the potentiometer 435 provided to the shift arm 425. The engagement detection section 155 can detect the engagement of the engaging portion 485 of the movable gear 480 and the engaging portion 475 of the fixed gear 470 also based on the load applied to the shift rod 75 detected by the load cell 78 provided to the shift rod 75. The engagement detection section 155 can detect the engagement of the engaging portion 485 of the movable gear 480 and the engaging portion 475 of the fixed gear 470 also based on the value of current supplied to the shift actuator 72 detected by the current detection circuit 79 provided to the shift actuator 72.

The clutch state detection section 105 can detect a half clutch state of the friction clutch 46 based on the rotation angle or the rotation position of the clutch actuator 70 which is detected by the potentiometer 96. For example, when the rotation angle of the clutch actuator 70 is equal to or smaller than a prescribed rotation angle θ1, the friction clutch 46 is detected as being in an engaged state. When the rotation angle of the clutch actuator 70 is equal to or larger than a prescribed rotation angle 02, the friction clutch 46 is detected as being in a disengaged state. When the rotation angle of the clutch actuator 70 is larger than 01 and smaller than θ2, the friction clutch 46 is detected as being in a half clutch state. In the case where a servo motor capable of detecting the rotation angle and the rotation position is used as the clutch actuator 70, the clutch state detection section 105 can detect a half clutch state of the friction clutch 46 based on the rotation angle or the rotation position detected by the servo motor.

The clutch actuator control section 135 controls the clutch actuator 70. The clutch actuator 70 can be driven based on the control by the clutch actuator control section 135. At the time of the change of gear position of the transmission mechanism 43, the clutch actuator control section 135 controls the clutch actuator 70 so as to disengage the friction clutch 46, to put the friction clutch 46 into a half clutch state, and then to engage the friction clutch 46. The clutch actuator control section 135 can control the clutch actuator 70 based on the position of the clutch actuator 70 detected by the potentiometer 96 to engage and disengage the friction clutch 46. The clutch actuator control section 135 can also control the clutch actuator 70 based on the pushing force applied to the pressure plate 451 to engage and disengage the friction clutch 46.

When the friction clutch 46 is in an engaged state and the shift actuator control section 140 has received a gear change instruction from the shift switch 8, the clutch actuator control section 135 controls the clutch actuator 70 to disengage the friction clutch 46. When the engagement detection section 155 detects the engagement of the engaging portion 485 of the movable gear 480 and the engaging portion 475 of the fixed gear 470, the clutch actuator control section 135 controls the clutch actuator 70 so as to engage the friction clutch 46, which has been disengaged, after putting the friction clutch 46 into a half clutch state. Namely, the clutch actuator control section 135 performs half clutch control of causing the friction plates 445 and the clutch plates 449 to approach each other at a first relative speed so that the friction plates 445 and the clutch plates 449 rotate with respect to each other while being in contact with each other. After the half clutch control, the clutch actuator control section 135 performs engagement completion control of causing the friction plates 445 and the clutch plates 449 to approach each other at a second relative speed, which is higher than the first relative speed, until the friction plates 445 and the clutch plates 449 rotate integrally together. Each of the first relative speed and the second relative speed does not need to be a fixed speed. Each of the first relative speed and the second relative speed may be an average relative speed of the friction plates 445 and the clutch plates 449 in the half clutch control and in the engagement completion control. There maybe a case where the friction plates 445 and the clutch plates 449 move in the direction of being distanced from each other during the half clutch control. In such a case, the first relative speed becomes temporarily negative, but the average relative speed of the friction plates 445 and the clutch plates 449 during the half clutch control is positive.

When the clutch rotation speed difference of the friction clutch 46 becomes substantially zero, the clutch actuator control section 135 engages the friction clutch 46 by performing the engagement completion control. The clutch rotation speed difference of the friction clutch 46 is the rotation speed difference between the clutch housing 443 (friction plates 445) and the clutch boss 447 (clutch plates 449), and is the same as the difference between the rotation rate of the engine 45 (rotation rate of the crankshaft 25) and the rotation rate of the main shaft 41. The clutch rotation speed difference can be calculated by use of the rotation speed of the crankshaft 25 detected by the crankshaft rotation speed sensor 60 and the rotation speed of the main shaft 41 detected by the main shaft rotation speed sensor 61.

The shift actuator control section 140 controls the shift actuator 72. The shift actuator 72 can be driven based on the control by the shift actuator control section 140. The shift actuator control section 140 controls the shift actuator 72 such that the shift arm 425 moves from the neutral position to the gear position change position. The shift actuator control section 140 controls the shift actuator 72 such that the shift arm 425 moves from the gear position change position to the neutral position.

When, at the time of the change of gear position of the transmission mechanism 43, the engagement detection section 155 detects the engagement of the engaging portion 485 of the movable gear 480 and the engaging portion 475 of the fixed gear 470 and then detects that the engagement has not been kept for a prescribed time duration while the friction clutch 46 is in a half clutch state, the shift actuator control section 140 controls the shift actuator 72 to give, continuously or again, a driving force to the shift arm 425 for moving the shift arm 425 from the neutral position toward the gear position change position. The expression "give continuously" means to start giving the driving force to the shift arm 425 for moving the shift arm 425 from the neutral position toward the gear position change position upon receiving a gear change instruction, and keep giving the driving force to the shift arm 425 until the engaging portion 485 of the movable gear 480 and the engaging portion 475 of the fixed gear 470 are put into engagement and the engagement of the engaging portion 485 of the movable gear 480 and the engaging portion 475 of the fixed gear 470 is kept for the prescribed time duration while the friction clutch 46 is in a half clutch state. The expression "give again" means to give the driving force to the shift arm 425 to move the shift arm 425 to the gear position change position, then finish giving the driving force to the shift arm 425, and then give the driving force to the shift arm 425. For giving the driving force to the shift arm 425 again, it is preferable to keep giving the driving force to the shift arm 425 until the engagement of the engaging portion 485 of the movable gear 480 and the engaging portion 475 of the fixed gear 470 is kept for the prescribed time duration while the friction clutch 46 is in a half clutch state.

When, at the time of the change of gear position of the transmission mechanism 43, the engagement detection section 155 detects the engagement of the engaging portion 485 of the movable gear 480 and the engaging portion 475 of the fixed gear 470 and then detects that the engagement of the engaging portion 485 of the movable gear 480 and the engaging portion 475 of the fixed gear 470 has been kept for a prescribed time duration while the friction clutch 46 is in a half clutch state, the shift actuator control section 140 controls the shift actuator 72 so as to return the shift arm 425 from the gear position change position to the neutral position.

When it is detected by the engagement detection section 155 that the engagement of the engaging portion 485 of the movable gear 480 and the engaging portion 475 of the fixed gear 470 has been kept for a prescribed time duration while the clutch actuator control section 135 performs the half clutch control, the shift actuator control section 140 controls the shift actuator 72 so as to move the shift arm 425 toward the neutral position before the half clutch control by the clutch actuator control section 135 is finished. Preferably, when it is detected by the engagement detection section 155 that the engagement of the engaging portion 485 of the movable gear 480 and the engaging portion 475 of the fixed gear 470 has been kept for a prescribed time duration while the clutch actuator control section 135 performs the half clutch control, the shift actuator control section 140 controls the shift actuator 72 so as to return the shift arm 425 to the neutral position before the half clutch control by the clutch actuator control section 135 is finished.

The automatic transmission device 40 according to this embodiment includes at least a clutch state detection device, an engagement detection device, a clutch actuator control device, and a shift actuator control device. The clutch state detection device includes at least the potentiometer 96 and the clutch state detection section 105. The engagement detection device includes at least the engagement detection section 155 and the potentiometer 428. The clutch actuator control device includes at least the clutch actuator control section 135 and the clutch actuator 70. The shift actuator control device includes at least the shift actuator control section 140 and the shift actuator 72.

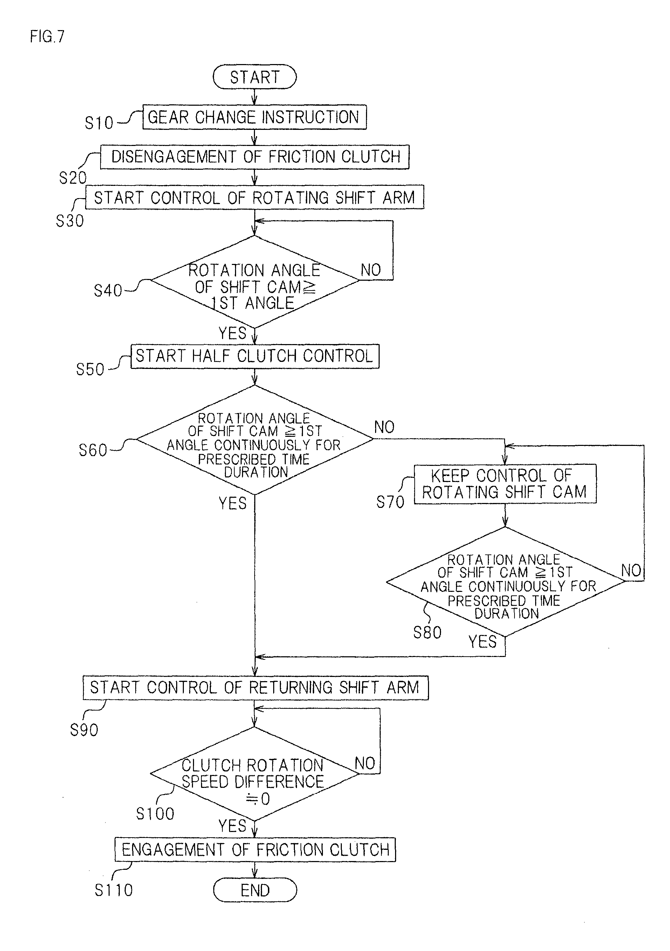

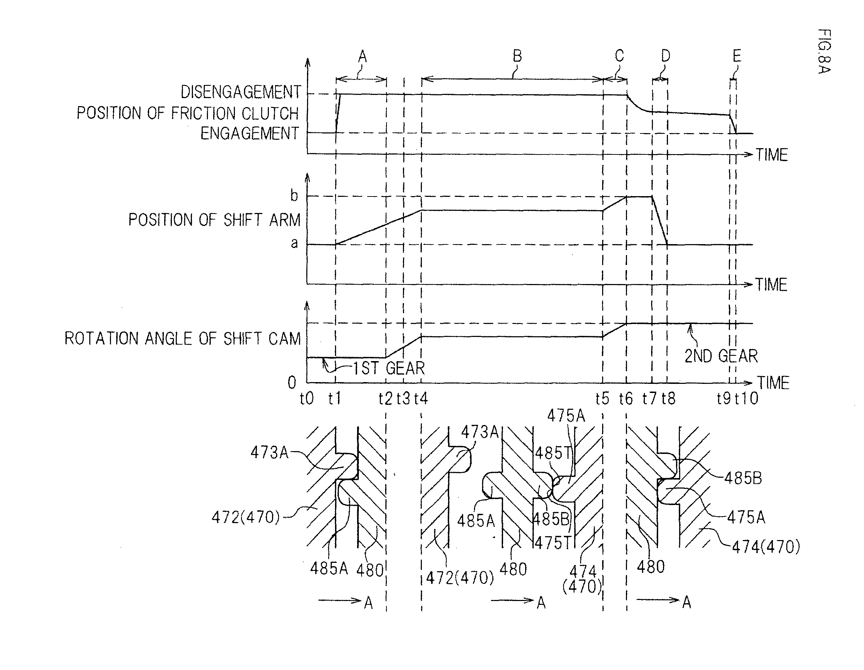

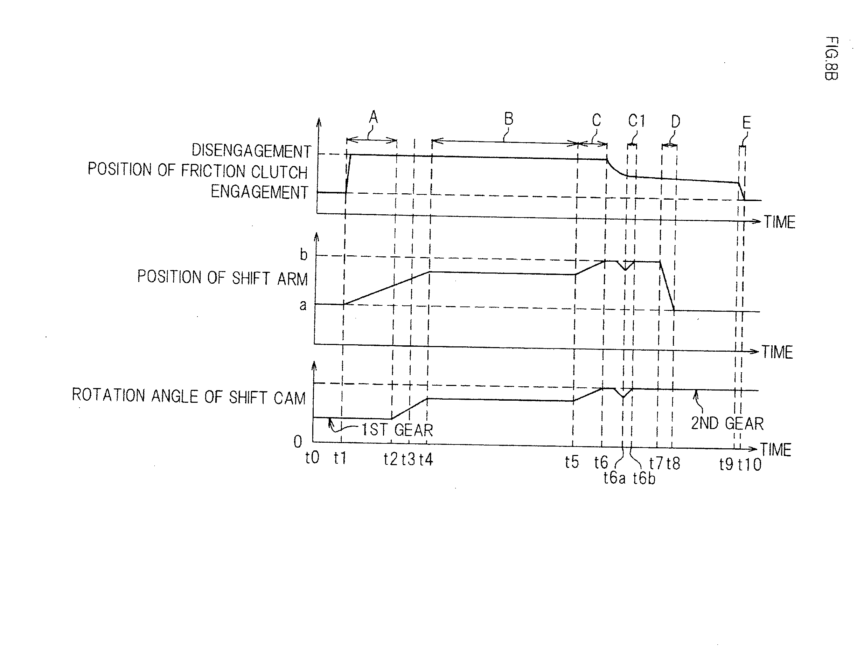

Now, with reference to FIG. 7 through FIG. 8B, gear change control of the automatic transmission device 40 according to this embodiment will be described. FIG. 7 is a flowchart showing the gear change control of the automatic transmission device 40 according to this embodiment. FIG. 8A is a timing diagram regarding the gear change control of the automatic transmission device 40 according to this embodiment. The timing diagram in FIG. 8A shows a case where the engagement of the engaging portion 485B of the movable gear 480 and the engaging portion 475A of the fixed gear 474 is kept for a prescribed time duration while the friction clutch 46 is in a half clutch state. FIG. 8B is a timing diagram regarding the gear change control of the automatic transmission device 40 according to this embodiment. The timing diagram in FIG. 8B shows a case where the engagement of the engaging portion 485B of the movable gear 480 and the engaging portion 475A of the fixed gear 474 is not kept for the prescribed time duration while the friction clutch 46 is in a half clutch state. At time t0 in FIG. 8A and FIG. 8B, the motorcycle 1 is running, and the gear position of the transmission mechanism 43 is the first gear. In FIG. 8A and FIG. 8B, the operation from time t0 to time t6 is the same. Thus, the operation from time t0 to time t6 will be described with reference to FIG. 8A for the convenience of explanation. FIG. 8A and FIG. 8B are regarding the change of gear position at the time of shift-up, but the gear change control of the automatic transmission device 40 according to this embodiment may be performed for the change of gear position at the time of shift-down.

In step S10, the rider operates the shift switch 8 while the motorcycle 1 is running. As a result, the gear change instruction is output from the shift switch 8 to the shift actuator control section 140. In the example shown in FIG. 8A, the gear change instruction is to change the gear position from the first gear to the second gear.

When the shift actuator control section 140 receives the gear change instruction, in step S20, the clutch actuator control section 135 drives the clutch actuator 70 to disengage the friction clutch 46 (see time t1 in FIG. 8A) in order to change the gear position of the transmission mechanism 43.

When the disengagement of the friction clutch 46 is started (see an area of reference sign A in FIG. 8A), in step S30, the shift actuator control section 140 performs control of moving the shift actuator 72 from the start position to the end position in the direction of arrow Z1 in FIG. 5A (see time t1 through t6 in FIG. 8A) in order to move the shift arm 425 from the neutral position (see reference sign a in FIG. 8A) to the gear position change position (see reference sign b in FIG. 8A). As a result, the shift arm 425 is rotated in the direction of arrow X1 in FIG. 5A about the rotation center C1. When the shift actuator 72 is driven to rotate the shift arm 425, the claw 427 is put into engagement with one of the plurality of protrusions 423 of the shift cam 421, namely, the protrusion 423a. Thus, the shift cam 421 is also rotated in the direction of arrow X1 in FIG. 5A (see time t2 through t6 in FIG. 8A). At this point, the movable gear 480 is moved in the direction of arrow A in FIG. 8A (axial direction of the drive shaft 42) so as to be separated from the fixed gear 472, with which the movable gear 480 was engaged before the gear change, and to approach the fixed gear 474 to be engaged after the gear change. At time t3 in FIG. 8A, the movable gear 480 is separated from the fixed gear 472 and thus dog drawing occurs. The movable gear 480 is moved further in the direction of arrow A in FIG. 8A and approaches the fixed gear 474.

In step S40, the ECU 100 determines whether the shift cam 421 has rotated by a prescribed angle or not. In more detail, the ECU 100 determines whether the rotation angle of the shift cam 421 detected by the potentiometer 428 is no less than a first angle or not. When the shift arm 425 is moved to the gear position change position (see FIG. 5B), the rotation angle of the shift cam 421 becomes equal to or larger than the first angle. When the rotation angle of the shift cam 421 is equal to or larger than the first angle, the control advances to step S50. By contrast, when the rotation angle of the shift cam 421 is smaller than the first angle, the ECU 100 repeats the above-mentioned determination until the rotation angle of the shift cam 421 becomes equal to or larger than the first angle. In this embodiment, the first angle is 60 degrees. When the shift cam 421 is rotated by 60 degrees, the engaging portion 485B of the movable gear 480 and the engaging portion 475A of the fixed gear 474 are put into engagement with each other. As a result, the one pair of gears located at positions corresponding to the rotation angle of the shift cam 421 are put into engagement with each other, and thus the gear position is changed.

At time t4 in FIG. 8A, the tip 485T of the engaging portion 485B of the movable gear 480 and the tip 475T of the engaging portion 475A of the fixed gear 474 bump into each other. Namely, dog bumping occurs. In an area of reference sign B in FIG. 8A, the dog bumping occurs and thus the shift cam 421 cannot be rotated. Therefore, the engaging portion 485B of the movable gear 480 and the engaging portion 475A of the fixed gear 474 cannot be put into engagement with each other.

At time t5 in FIG. 8A, the dog bumping is resolved. Thus, in an area of reference sign C in FIG. 8A, the shift cam 421 is rotated. Since the rotation angle of the shift cam 421 becomes equal to or larger than the first rotation angle, the engaging portion 485B of the movable gear 480 and the engaging portion 475A of the fixed gear 474 are put into engagement with each other (see time t6 in FIG. 8A). In this embodiment, when the shift arm 425 reaches the gear position change position, the shift actuator control section 140 stops driving the shift actuator 72. Therefore, the shift arm 425 is not supplied with a driving force for moving the shift arm 425 from the neutral position toward the gear position change position. At this point, the engagement detection section 155 detects the engagement of the engaging portion 485B of the movable gear 480 and the engaging portion 475A of the fixed gear 474.

When the rotation angle of the shift cam 421 becomes equal to or larger than the first angle and thus the change of gear position from the first gear to the second gear based on the gear change instruction is finished (see time t6 in FIG. 8A), in step S50, the clutch actuator control section 135 controls the clutch actuator 70 to put the friction clutch 46 into a half clutch state from the disengaged state. From time t6, the clutch actuator control section 135 performs the half clutch control of causing the friction plates 445 and the clutch plates 449 to approach each other at the first relative speed so that the friction plates 445 and the clutch plates 449 rotate with respect to each other while being in contact with each other. At this point, the clutch state detection section 105 detects that the friction clutch 46 is in a half clutch state.

When the rotation angle of the shift cam 421 becomes equal to or larger than the first rotation angle, and thus the change of gear position is finished and the half clutch control is started, in step S60, the ECU 100 determines whether the rotation angle of the shift cam 421 has been no less than a prescribed angle for a prescribed time duration or not. Namely, the ECU 100 determines whether the engagement of the engaging portion 485B of the movable gear 480 and the engaging portion 475A of the fixed gear 474 has been kept for a prescribed time duration or not based on the detection result of the engagement detection section 155. When it is detected by the engagement detection section 155 that the engagement of the engaging portion 485B of the movable gear 480 and the engaging portion 475A of the fixed gear 474 has been kept for the prescribed time duration while the friction clutch 46 is in a half clutch state (see time t7 in FIG. 8A), the control advances to step S90. By contrast, when it is detected by the engagement detection section 155 that the engagement of the engaging portion 485B of the movable gear 480 and the engaging portion 475A of the fixed gear 474 has not been kept for the prescribed time duration while the friction clutch 46 is in a half clutch state (see time t6a in FIG. 8B), the control advances to step S70.

When the friction clutch 46 is in a half clutch state and it is detected by the engagement detection section 155 that the engagement of the engaging portion 485B of the movable gear 480 and the engaging portion 475A of the fixed gear 474 of the transmission mechanism 43 has not been kept for the prescribed time duration (see time t6a in FIG. 8B), it is considered that the engaging portion 485B of the movable gear 480 and the engaging portion 475A of the fixed gear 474 are not engaged with each other sufficiently. In step S70, the shift actuator control section 140 rotates the shift actuator 72 again in the direction of arrow Z1 in FIG. 5A to give again a driving force to the shift arm 425 for moving the shift arm 425 from the neutral position toward the gear position change position. As a result, the shift arm 425 is moved again toward the gear position change position (see an area of reference sign C 1 in FIG. 8B), and reaches again the gear position change position at time t6b in FIG. 8B.

When the shift arm 425 reaches the gear position change position upon receipt of a gear change instruction, the shift actuator control section 140 stops driving the shift actuator 72. For this reason, the shift arm 425 is not supplied with a driving force for moving the shift arm 425 from the neutral position toward the gear position change position. Therefore, when the engaging portion 485B of the movable gear 480 and the engaging portion 475A of the fixed gear 474 are once engaged with each other and then the movable gear 480 is flipped by the fixed gear 474 in a direction of being separated from the fixed gear 474, the engaging portion 485B of the movable gear 480 and the engaging portion 475A of the fixed gear 474 are released from the engagement because the shift arm 425 is not supplied anymore with a driving force for moving the shift arm 425 from the neutral position toward the gear position change position. However, even in such a case, the shift arm 425 is supplied again with a driving force for moving the shift arm 425 toward the gear position change position. Therefore, the engaging portions 485B and 475A of the movable gear 480 and the fixed gear 474 are put into engagement with each other shortly. Thus, the change of gear position can be performed with certainty.

After the shift arm 425 is supplied again with a driving force for moving the shift arm 425 from the neutral position toward the gear position change position, in step S80, the ECU 100 determines whether the rotation angle of the shift cam 421 has been no less than a prescribed angle for a prescribed time duration or not. Namely, the ECU 100 determines whether the engagement of the engaging portion 485B of the movable gear 480 and the engaging portion 475A of the fixed gear 474 has been kept for a prescribed time duration or not based on the detection result of the engagement detection section 155. When it is detected by the engagement detection section 155 that the engagement of the engaging portion 485B of the movable gear 480 and the engaging portion 475A of the fixed gear 474 has been kept for the prescribed time duration while the friction clutch 46 is in a half clutch state (see time t7 in FIG. 8B), the control advances to step S90. By contrast, when it is detected by the engagement detection section 155 that the engagement of the engaging portion 485B of the movable gear 480 and the engaging portion 475A of the fixed gear 474 has not been kept for the prescribed time duration while the friction clutch 46 is in a half clutch state, the control returns to step S70.

When the friction clutch 46 is in a half clutch state and it is detected by the engagement detection section 155 that the engagement of the engaging portion 485B of the movable gear 480 and the engaging portion 475A of the fixed gear 474 of the transmission mechanism 43 has been kept for the prescribed time duration, it is considered that the engaging portion 485B of the movable gear 480 and the engaging portion 475A of the fixed gear 474 are engaged with each other sufficiently. Therefore, even if the shift arm 425 is returned from the gear position change position to the neutral position after a prescribed time duration passes, the engagement of the movable gear 480 and the fixed gear 474 is kept by a friction force which can be generated between the engaging portions 485B and 475A. In step S90, the shift actuator control section 140 performs control of moving the shift actuator 72 from the end position to the start position in the direction of arrow Z2 in FIG. 5A in order to move the shift arm 425 from the gear position change position to the neutral position. As a result, the shift arm 425 is rotated in the direction of arrow X2 in FIG. 5A about the rotation center C1. When the shift actuator 72 is driven to rotate the shift arm 425, the claw 427 and the protrusion 423a are released from the engagement. Therefore, even when the shift arm 425 is rotated in the direction of arrow X2 in FIG. 5A, the shift cam 421 is not rotated (see an area of reference sign D in FIG. 8A). In the example shown in FIG. 8A, at time t8, the shift arm 425 is returned to the neutral position.

In step S100, the ECU 100 determines whether the clutch rotation speed difference of the friction clutch 46 is substantially zero or not based on the rotation speed of the crankshaft 25 detected by the crankshaft rotation speed sensor 60 and the rotation speed of the main shaft 41 detected by the main shaft rotation speed sensor 61. When the clutch rotation speed difference is substantially zero (see time t9 in FIG. 8A), the control advances to step S110 in order to finish the half clutch control. By contrast, when the clutch rotation speed difference is not substantially zero, the ECU 100 repeats the above-mentioned determination until the clutch rotation speed difference becomes substantially zero.

In step S110, the clutch rotation speed difference is substantially zero, and thus the clutch actuator control section 135 drives the clutch actuator 70 to engage the friction clutch 46. The clutch actuator control section 135 performs the engagement completion control of causing the friction plates 445 and the clutch plates 449 to approach each other at the second relative speed, which is higher than the first relative speed used for the half clutch control (see an area of reference sign E in FIG. 8A), until the friction plates 445 and the clutch plates 449 rotate integrally together. When the friction clutch 46 is engaged (see time t10 in FIG. 8A), the control shown in FIG. 7 is finished.

### (Second Embodiment)

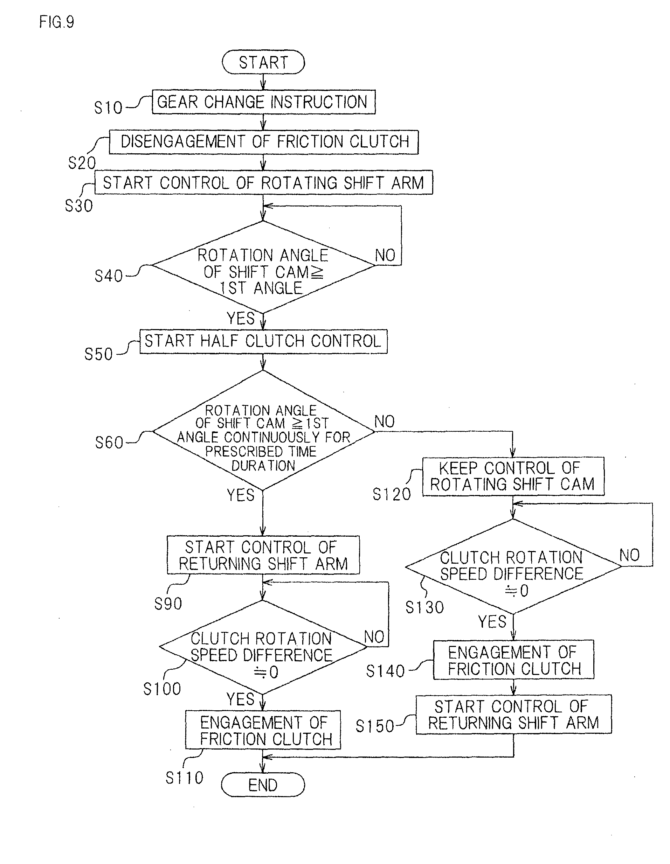

FIG. 9 is a flowchart showing gear change control of the automatic transmission device 40 according to a second embodiment. In FIG. 9, the steps in which the same processing is performed as that of FIG. 7 bear identical step numbers thereto and descriptions thereof will be omitted.

In this embodiment, in step S120, the shift actuator control section 140 rotates the shift actuator 72 again in the direction of arrow Z1 in FIG. 5A to give a driving force continuously to the shift arm 425 for moving the shift arm 425 from the neutral position toward the gear position change position. Even if, after the engaging portion 485B of the movable gear 480 and the engaging portion 475A of the fixed gear 474 are once engaged with each other, the movable gear 480 is flipped by the fixed gear 474 in the direction of being separated from the fixed gear 474, the engaging portions 485B and 475A of the movable gear 480 and the fixed gear 474 are put into engagement with each other shortly because the shift arm 425 is continuously supplied with the driving force for moving the shift arm 425 toward the gear position change position. Namely, the shift arm 425 reaches again the gear position change position. Thus, the change of gear position can be performed with certainty.

In step S130, the ECU 100 determines whether the clutch rotation speed difference of the friction clutch 46 is substantially zero or not based on the rotation speed of the crankshaft 25 detected by the crankshaft rotation speed sensor 60 and the rotation speed of the main shaft 41 detected by the main shaft rotation speed sensor 61. When the clutch rotation speed difference is substantially zero, the control advances to step S140 in order to finish the half clutch control. By contrast, when the clutch rotation speed difference is not substantially zero, the ECU 100 repeats the above-mentioned determination until the clutch rotation speed difference becomes substantially zero.

In step S140, the clutch rotation speed difference is substantially zero, and thus the clutch actuator control section 135 drives the clutch actuator 70 to engage the friction clutch 46. The clutch actuator control section 135 performs the engagement completion control of causing the friction plates 445 and the clutch plates 449 to approach each other at the second relative speed, which is higher than the first relative speed used for the half clutch control, until the friction plates 445 and the clutch plates 449 rotate integrally together.

When the friction clutch 46 is engaged, in step S150, the shift actuator control section 140 performs control of moving the shift actuator 72 from the end position to the start position in the direction of arrow Z2 in FIG. 5A in order to move the shift arm 425, which has reached again the gear position change position from the gear position change position to the neutral position. As a result, the shift arm 425 is rotated in the direction of arrow X2 in FIG. 5A about the rotation center C1. When the shift actuator 72 is driven to rotate the shift arm 425, the claw 427 and the protrusion 423a are released from the engagement. Therefore, even if the shift arm 425 is rotated in the direction of arrow X2 in FIG. 5A, the shift cam 421 is not rotated. Then, the shift arm 425 is returned to the neutral position.

As described above, with the automatic transmission device 40 according to the above embodiments, in the case where, at the time of the change of gear position of the transmission mechanism 43, the friction clutch 46 is in a half clutch state and the engagement of the engaging portions 485 and 475 of the movable gear 480 and the fixed gear 470 of the transmission mechanism 43 is kept for a prescribed time duration, it is considered that the movable gear 480 and the fixed gear 470 are engaged with each other sufficiently. Therefore, even if the shift arm 425 is returned from the gear position change position to the neutral position after a prescribed time duration passes, the engagement of the movable gear 480 and the fixed gear 470 are kept by a friction force which can be generated between the engaging portions 485 and 475. Owing to this, the shift arm 425 can be returned to the neutral position quickly and thus the time duration until the next change of gear position can be shortened. By contrast, in the case where, at the time of the change of gear position of the transmission mechanism 43, the friction clutch 46 is in a half clutch state and the engagement of the engaging portions 485 and 475 of the movable gear 480 and the fixed gear 470 of the transmission mechanism 43 is not kept for the prescribed time duration, it is considered that the movable gear 480 and the fixed gear 470 are not engaged with each other sufficiently. However, in this case, the shift actuator control section 140 drives the shift actuator 72 to give, continuously or again, a driving force to the shift arm 425 for moving the shift arm 425 toward the gear position change position. Therefore, the engaging portions 485 and 475 of the movable gear 480 and the fixed gear 470 are put into engagement with each other shortly. Thus, the change of gear position of the transmission mechanism 43 can be performed with certainty.

According to the above embodiments, when it is detected by the engagement detection section 155 that the engaging portion 485 of the movable gear 480 is put into engagement with the engaging portion 475 of the fixed gear 470, the clutch actuator control section 135 controls the clutch actuator 70 so as to engage the friction clutch 46, which has been disengaged, after putting the friction clutch 46 into a half clutch state. Owing to this, the half clutch control is started immediately when dog fitting occurs. Thus, the time duration required for gear change can be shortened.

According to above embodiments, the friction clutch 46 includes the friction plates 445 to which a torque of the engine 45 is conveyed and the clutch plates 449 capable of contacting, and being separated from, the friction plates 445, and is structured to be engaged and disengaged when the friction plates 445 and the clutch plates 449 contact, and are separated from, each other. At the time of change of gear position of the transmission mechanism 43, the clutch actuator control section 135 performs the half clutch control of causing the friction plates 445 and the clutch plates 449 to approach each other at the first relative speed so that the friction plates 445 and the clutch plates 449 rotate with respect to each other while being in contact with each other, and also performs, after the half clutch control, the engagement completion control of causing the friction plates 445 and the clutch plates 449 to approach each other at the second relative speed, which is higher than the first relative speed, until the friction plates 445 and the clutch plates 449 rotate integrally together. When it is detected by the engagement detection section 155 that the engagement of the engaging portion 485 of the movable gear 480 and the engaging portion 475 of the fixed gear 470 has been kept for a prescribed time duration while the half clutch control is performed, the shift actuator control section 140 moves the shift arm 425 toward the neutral position before the half clutch control is finished. Owing to this, the shift arm 425 is moved toward the neutral position before the half clutch control is finished. Thus, the time duration until the next gear change can be shortened.

According to the above embodiments, when it is detected by the engagement detection section 155 that the engagement of the engaging portion 485 of the movable gear 480 and the engaging portion 475 of the fixed gear 470 has been kept for a prescribed time duration while the half clutch control is performed, the shift actuator control section 140 returns the shift arm 425 to the neutral position before the half clutch control is finished. Owing to this, the shift arm 425 is returned to the neutral position before the half clutch control is finished. Thus, the time duration until the next gear change can be further shortened.

According to the above embodiments, the automatic transmission device 40 includes the potentiometer 428 for detecting a rotation angle of the shift cam 421. The engagement detection section 155 can detect the engagement of the engaging portion 485 of the movable gear 480 and the engaging portion 475 of the fixed gear 470 based on the rotation angle of the shift cam 421. Owing to this, the engagement of the engaging portions 485 and 475 of the movable gear 480 and the fixed gear 470 can be detected easily.

According to the above embodiments, the automatic transmission device 40 includes the potentiometer 76 for detecting a driving amount of the shift actuator 72. The engagement detection section 155 can detect the engagement of the engaging portion 485 of the movable gear 480 and the engaging portion 475 of the fixed gear 470 based on the position of the shift actuator 72. Owing to this, the engagement of the engaging portions 485 and 475 of the movable gear 480 and the fixed gear 470 can be detected easily.

According to the above embodiments, the automatic transmission device 40 includes the potentiometer 435 for detecting a rotation angle of the shift arm 425. The engagement detection section 155 can detect the engagement of the engaging portion 485 of the movable gear 480 and the engaging portion 475 of the fixed gear 470 based on the rotation angle of the shift arm 425. Owing to this, the engagement of the engaging portions 485 and 475 of the movable gear 480 and the fixed gear 470 can be detected easily.

According to the above embodiments, the shift actuator 72 is an electric motor 72, and the automatic transmission device 40 includes the current detection circuit 79 for detecting a value of current supplied to the electric motor 72. The engagement detection section 155 can detect the engagement of the engaging portion 485 of the movable gear 480 and the engaging portion 475 of the fixed gear 470 based on the value of current supplied to the shift actuator 72. Owing to this, the engagement of the engaging portions 485 and 475 of the movable gear 480 and the fixed gear 470 can be detected easily.

According to the above embodiments, the automatic transmission device 40 includes the load cell 78 for measuring a load applied to the shift arm 425. The engagement detection section 155 can detect the engagement of the engaging portion 485 of the movable gear 480 and the engaging portion 475 of the fixed gear 470 based on the load applied to the shift arm 425. Owing to this, the engagement of the engaging portions 485 and 475 of the movable gear 480 and the fixed gear 470 can be detected easily.

According to above embodiments, the motorcycle 1 including the automatic transmission device 40 having the above-described structure is provided. The motorcycle 1 provides the above-described functions and effects.

The vehicle according to the present invention is not limited to a vehicle for executing semi-automatic control of automatically performing the gear change based on an intention of the rider, and may be a vehicle for executing full-automatic control of automatically performing the gear change in accordance with the driving state of the vehicle, regardless of the intention of the rider. Instead of the clutch actuator 70 and the shift actuator 72 being provided separately, a single actuator for driving the friction clutch 46 and the transmission mechanism 43 may be provided.

## Claims

1. An automatic transmission device (40), comprising:
a clutch (46), located between an engine (45) and a driving wheel (23), configured to convey and cut off a torque from the engine (45) to the driving wheel (23);
a clutch actuator (70) configured to engage and disengage the clutch (46);
a stepped transmission mechanism (43) located between the clutch (46) and the driving wheel (23) and including a rotatable shift cam (421); a plurality of fixed gears (92) including engaging portions (93) and not movable along the rotation of the shift cam (421); movable gears (94) including engaging portions (95) engageable with the engaging portions (93) of the fixed gears (92) and movable so as to approach, or to be distanced from, the fixed gears (92) along with the rotation of the shift cam (421); and a shift arm (425) movable reciprocally between a neutral position and a gear position change position; in which when the shift arm (425) is moved from the neutral position to the gear position change position, the shift cam (421) is rotated, and change of gear position, by which a combination of movable gear (94) and fixed gear (92) engaged with each other is changed, is performed;
a shift actuator (72) configured to drive the shift arm (425);
a clutch state detection device (105) configured to detect a state of the clutch (46);
an engagement detection device (155) configured to detect engagement of the engaging portion (95) of the movable gear (94) and the engaging portion (93) of the fixed gear (92);
a clutch actuator control device (135) configured to, at the time of the change of gear position, control the clutch actuator (70) such that the clutch (46) is disengaged, is put into a half clutch state, and then is engaged; and
a shift actuator control device (140) configured to control the shift actuator (72);
**characterized in that** at the time of the change of gear position,
when, after the engaging portion (95) of the movable gear (94) is put into engagement with the engaging portion (93) of the fixed gear (92), it is detected by the engagement detection device (155) that the engagement has not been kept for a prescribed time duration while the clutch (46) is in a half clutch state, the shift actuator control device (140) is configured to give a driving force, continuously or again, to the shift arm (425) so as to move the shift arm (425) from the neutral position toward the gear position change position; and
when it is detected by the engagement detection device (155) that the engagement of the engaging portion (95) of the movable gear (94) and the engaging portion (93) of the fixed gear (92) has been kept for the prescribed time duration while the clutch (46) is in a half clutch state, the shift actuator control device (140) is configured to return the shift arm (425) to the neutral position.

2. An automatic transmission device (40) according to claim 1, wherein when it is detected by the engagement detection device (155) that the engaging portion (95) of the movable gear (94) is put into engagement with the engaging portion (93) of the fixed gear (92), the clutch actuator control device (135) is configured to control the clutch actuator (70) so as to engage the clutch (46), which has been disengaged, after putting the clutch (46) into a half clutch state.

3. An automatic transmission device (40) according to claim 1 or 2, wherein:
the clutch (46) includes a driving-side rotation body (445) to which the torque of the engine (45) is conveyed and a subordinate-side rotation body (449) capable of contacting, and being separated from, the driving-side rotation body (445), and is configured to be engaged and disengaged when the driving-side rotation body (445) and the subordinate-side rotation body (449) contact, and are separated from, each other;
at the time of the change of gear position of the transmission mechanism (43), the clutch actuator control device (135) is configured to perform half clutch control of causing the driving-side rotation body (445) and the subordinate-side rotation body (449) to approach each other at a first relative speed so that the driving-side rotation body (445) and the subordinate-side rotation body (449) rotate with respect to each other while being in contact with each other, and is configured to perform, after the half clutch control, engagement completion control of causing the driving-side rotation body (445) and the subordinate-side rotation body (449) to approach each other at a second relative speed, which is higher than the first relative speed, until the driving-side rotation body (445) and the subordinate-side rotation body (449) rotate integrally together; and
when it is detected by the engagement detection device (155) that the engagement of the engaging portion (95) of the movable gear (94) and the engaging portion (93) of the fixed gear (92) has been kept for the prescribed time duration while the half clutch control is performed, the shift actuator control device (140) is preferably configured to move the shift arm (425) toward the neutral position before the half clutch control is finished.

4. An automatic transmission device (40) according to any one of claims 1 to 3, wherein when it is detected by the engagement detection device (155) that the engagement of the engaging portion (95) of the movable gear (94) and the engaging portion (93) of the fixed gear (92) has been kept for the prescribed time duration while the half clutch control is performed, the shift actuator control device (140) is configured to return the shift arm (425) to the neutral position before the half clutch control is finished.

5. An automatic transmission device (40) according to any one of claims 1 to 4, further comprising a shift cam detection device (428) configured to detect a rotation angle of the shift cam (421).

6. An automatic transmission device (40) according to claim 5, wherein the engagement detection device (155) is configured to detect the engagement of engaging portion (95) of the movable gear (94) and the engaging portion (93) of the fixed gear (92) based on the rotation angle of the shift cam (421) detected by the shift cam detection device (428).

7. An automatic transmission device (40) according to any one of claims 1 to 6, further comprising a shift actuator detection device (76) configured to detect an operation position of the shift actuator (72).

8. An automatic transmission device (40) according to claim 7, wherein the engagement detection device (155) is configured to detect the engagement of engaging portion (95) of the movable gear (94) and the engaging portion (93) of the fixed gear (92) based on the operation position of the shift actuator (72) detected by the shift actuator detection device (76).

9. An automatic transmission device (40) according to any one of claims 1 to 8, further comprising a shift arm detection device (435) configured to detect an operation position of the shift arm (425).

10. An automatic transmission device (40) according to claim 9, wherein the engagement detection device (155) is configured to detect the engagement of engaging portion (95) of the movable gear (94) and the engaging portion (93) of the fixed gear (92) based on the operation position of the shift arm (425) detected by the shift arm detection device (435).

11. An automatic transmission device (40) according to any one of claims 1 to 10, wherein:
the shift actuator (72) is an electric motor (72); and
the automatic transmission device (40) further comprises a current detection device (79) configured to detect a value of current supplied to the electric motor (72).

12. An automatic transmission device (40) according to claim 11, the engagement detection device (155) is configured to detect the engagement of engaging portion (95) of the movable gear (94) and the engaging portion (93) of the fixed gear (92) based on the value of current supplied to the electric motor (72) detected by the current detection device (79).

13. An automatic transmission device (40) according to any one of claims 1 to 12, further comprising a load detection device (78) configured to detect a load applied to the shift arm (425).

14. An automatic transmission device (40) according to claim 13, wherein the engagement detection device (155) is configured to detect the engagement of engaging portion (95) of the movable gear (94) and the engaging portion (93) of the fixed gear (92) based on the load applied to the shift arm (425) detected by the load detection device (78).

15. A vehicle (1), comprising an automatic transmission device (40) according to any one of claims 1 to 14.

## Patentansprüche

1. Automatikgetriebe-Vorrichtung (40), die umfasst:
eine Kupplung (46), die sich zwischen einem Motor (45) und einem Antriebsrad (23) befindet und so eingerichtet ist, dass sie ein Drehmoment von dem Motor (45) auf das Antriebsrad (23) überträgt oder sperrt;
ein Kupplungs-Betätigungselement (70), das zum Einrücken und Ausrücken der Kupplung (46) eingerichtet ist;
einen Stufengetriebemechanismus (43), der sich zwischen der Kupplung (46) und dem Antriebsrad (23) befindet und einen drehbaren Schaltnocken (421), eine Vielzahl feststehender Zahnräder (92), die Eingriffsabschnitte (93) enthalten und nicht mit der Drehung des Schaltnockens (421) bewegt werden können, bewegliche Zahnräder (94), die Eingriffsabschnitte (95) enthalten, die mit den Eingriffsabschnitten (93) der feststehenden Zahnräder (92) in Eingriff gebracht werden können, und mit der Drehung des Schaltnockens (421) so bewegt werden können, dass sie sich den feststehenden Zahnrädern (92) nähern oder von ihnen entfernen, sowie einen Schaltarm (425) enthält, der zwischen einer neutralen Position und einer Position zum Ändern einer Gangposition hin- und herbewegt werden kann, wobei, wenn der Schaltarm (425) von der neutralen Position an die Position zum Ändern einer Gangposition bewegt wird, der Schaltnocken (421) gedreht wird und Änderung der Gangposition durchgeführt wird, durch die eine Kombination aus beweglichem Zahnrad (94) und feststehendem Zahnrad (92) geändert wird, die in Eingriff miteinander sind;
ein Schalt-Betätigungselement (72), das zum Antreiben des Schaltarms (425) eingerichtet ist;
eine Vorrichtung (105) zum Erfassen eines Zustandes der Kupplung, die zum Erfassen eines Zustandes der Kupplung (46) eingerichtet ist;
eine Vorrichtung (155) zum Erfassen von Eingriff, die zum Erfassen von Eingriff des Eingriffsabschnitts (95) des beweglichen Zahnrades (94) und des Eingriffsabschnitts (93) des feststehenden Zahnrades (92) eingerichtet ist;
eine Vorrichtung (135) zum Steuern des Kupplungs-Betätigungselementes, die so eingerichtet ist, dass sie beim Ändern der Gangposition das Kupplungs-Betätigungselement (70) so steuert, dass die Kupplung (46) ausgerückt wird, in einen Halbkupplungs-Zustand gebracht wird und dann eingerückt wird; und
eine Vorrichtung (140) zum Steuern des Schalt-Betätigungselementes, die zum Steuern des Schalt-Betätigungselementes (72) eingerichtet ist;
**dadurch gekennzeichnet, dass** zum Zeitpunkt des Änderns der Schaltposition,
die Vorrichtung (140) zum Steuern des Schalt-Betätigungselementes so eingerichtet ist,
dass sie wenn, nachdem der Eingriffsabschnitt (95) des beweglichen Zahnrades (94) in Eingriff mit dem Eingriffsabschnitt (93) des feststehenden Zahnrades (92) gebracht worden ist, durch die Vorrichtung (155) zum Erfassen von Eingriff erfasst wird, dass der Eingriff nicht über eine vorgegebene Zeitdauer gehalten worden ist, während sich die Kupplung (56) in einem Halb-Kupplungszustand befindet, kontinuierlich oder erneut eine Antriebskraft auf den Schaltarm (425) ausübt, um den Schaltarm (425) von der neutralen Position an die Position zum Ändern der Schaltposition zu bewegen; und
die Vorrichtung (140) zum Steuern des Schalt-Betätigungselementes so eingerichtet ist, dass sie, wenn durch die Vorrichtung (155) zum Erfassen von Eingriff erfasst wird, dass der Eingriff des Eingriffsabschnitts (95) des beweglichen Zahnrades (94) und des Eingriffsabschnitts (93) des feststehenden Zahnrades (92) über die vorgeschriebene Zeitdauer gehalten worden ist, während sich die Kupplung (46) in einem Halbkupplungs-Zustand befindet, den Schaltarm (425) an die neutrale Position zurückführt.

2. Automatikgetriebe-Vorrichtung (40) nach Anspruch 1, wobei die Vorrichtung (135) zum Steuern des Kupplungs-Betätigungselementes so eingerichtet ist, dass sie, wenn durch die Vorrichtung (155) zum Erfassen von Eingriff erfasst wird, dass der Eingriffsabschnitt (95) des beweglichen Zahnrades (94) in Eingriff mit dem Eingriffsabschnitt (93) des feststehenden Zahnrades (92) gebracht wird, das Kupplungs-Betätigungselement (70) so steuert, dass, nachdem die Kupplung (46) in einen Halbkupplungs-Zustand gebracht ist, die Kupplung (46), die ausgerückt worden ist, eingerückt wird.

3. Automatikgetriebe-Vorrichtung (40) nach Anspruch 1 oder 2, wobei die Kupplung (46) einen Drehkörper (545) einer antreibenden Seite, zu dem das Drehmoment des Motors (45) übertragen wird, und einen Drehkörper (449) einer untergeordneten Seite enthält, der mit dem Drehkörper (545) der antreibenden Seite in Kontakt kommen und von ihm getrennt werden kann, und sie so eingerichtet ist, dass sie eingerückt und ausgerückt wird, wenn der Drehkörper (445) der antreibenden Seite und der Drehkörper (549) der untergeordneten Seite miteinander in Kontakt kommen und voneinander getrennt werden;
die Vorrichtung (135) zum Steuern des Kupplungs-Betätigungselementes so eingerichtet ist, dass sie zum Zeitpunkt der Änderung der Schaltposition des Getriebemechanismus (43) Halbkupplungs-Steuerung durchführt, durch die veranlasst wird, dass sich der Drehkörper (445) der antreibenden Seite und der Drehkörper (449) der untergeordneten Seite einander mit einer ersten relativen Geschwindigkeit nähern, so dass sich der Drehkörper (445) der antreibenden Seite und der Drehkörper (449) der untergeordneten Seite zueinander drehen und dabei in Kontakt miteinander sind, und so eingerichtet ist, dass sie nach der Halbkupplungs-Steuerung Einrückabschluss-Steuerung durchführt, durch die veranlasst wird, dass sich der Drehkörper (445) der antreibenden Seite und der Drehkörper (449) der untergeordneten Seite einander mit einer zweiten relativen Geschwindigkeit nähern, die höher ist als die erste relative Geschwindigkeit, bis sich der Drehkörper (445) der antreibenden Seite und der Drehkörper (449) der untergeordneten Seite integral miteinander drehen; und
die Vorrichtung (140) zum Steuern des Schalt-Betätigungselementes vorzugsweise so eingerichtet ist, dass sie, wenn durch die Vorrichtung (155) zum Erfassen von Eingriff erfasst wird, dass der Eingriff des Eingriffsabschnitts (95) des beweglichen Zahnrades (94) und des Eingriffsabschnitts (93) des feststehenden Zahnrades (92) über die vorgeschriebene Zeitdauer gehalten worden ist, während die Halbkupplungs-Steuerung durchgeführt wird, den Schaltarm (425) auf die neutrale Position zubewegt, bevor die Halbkupplungs-Steuerung beendet wird.

4. Automatikgetriebe-Vorrichtung (40) nach einem der Ansprüche 1 bis 3, wobei die Vorrichtung (140) zum Steuern des Schalt-Betätigungselementes so eingerichtet ist, dass sie, wenn durch die Vorrichtung (155) zum Erfassen von Eingriff erfasst wird, dass der Eingriff des Eingriffsabschnitts (95) des beweglichen Zahnrades (94) und des Eingriffsabschnitts (93) des feststehenden Zahnrades (92) über die vorgeschriebene Zeitdauer gehalten worden ist, während die Halbkupplungs-Steuerung durchgeführt wird, den Schaltarm (425) an die neutrale Position zurückführt, bevor die Halbkupplungs-Steuerung beendet wird.

5. Automatikgetriebe-Vorrichtung (40) nach einem der Ansprüche 1 bis 4, die des Weiteren eine Vorrichtung (428) zum Erfassen des Schaltnockens umfasst, die zum Erfassen eines Drehwinkels des Schaltnockens (421) eingerichtet ist.

6. Automatikgetriebe-Vorrichtung (40) nach Anspruch 5, wobei die Vorrichtung (155) zum Erfassen von Eingriff so eingerichtet ist, dass sie den Eingriff des Eingriffsabschnitts (95) des beweglichen Zahnrades (94) und des Eingriffsabschnitts (93) des feststehenden Zahnrades (92) auf Basis des durch die Vorrichtung (428) zum Erfassen des Schaltnockens erfassten Drehwinkels des Schaltnockens (421) erfasst.

7. Automatikgetriebe-Vorrichtung (40) nach einem der Ansprüche 1 bis 6, die des Weiteren eine Vorrichtung (76) zum Erfassen des Schalt-Betätigungselementes umfasst, die zum Erfassen einer Funktionsposition des Schalt-Betätigungselementes (72) eingerichtet ist.

8. Automatikgetriebe-Vorrichtung (40) nach Anspruch 7, wobei die Vorrichtung (155) zum Erfassen von Eingriff so eingerichtet ist, dass sie den Eingriff des Eingriffsabschnitts (95) des beweglichen Zahnrades (94) und des Eingriffsabschnitts (93) des feststehenden Zahnrades (92) auf Basis der durch die Vorrichtung (76) zum Erfassen des Schalt-Betätigungselementes erfassten Funktionsposition des Schalt-Betätigungselementes (72) erfasst.

9. Automatikgetriebe-Vorrichtung (40) nach einem der Ansprüche 1 bis 8, die des Weiteren eine Vorrichtung (435) zum Erfassen des Schaltarms umfasst, die so eingerichtet ist, dass sie eine Funktionsposition des Schaltarms (425) erfasst.

10. Automatikgetriebe-Vorrichtung (40) nach Anspruch 9, wobei die Vorrichtung (155) zum Erfassen von Eingriff so eingerichtet ist, dass sie den Eingriff des Eingriffsabschnitts (95) des beweglichen Zahnrades (94) und des Eingriffsabschnitts (93) des feststehenden Zahnrades (92) auf Basis der durch die Vorrichtung (435) zum Erfassen des Schaltarms erfassten Funktionsposition des Schaltarms (425) erfasst.

11. Automatikgetriebe-Vorrichtung (40) nach einem der Ansprüche 1 bis 10, wobei
das Schalt-Betätigungselement (72) ein Elektromotor (72) ist; und
die Automatikgetriebe-Vorrichtung (40) des Weiteren eine Vorrichtung (79) zum Erfassen von Strom umfasst, die zum Erfassen eines Wertes von dem Elektromotor (72) zugeführtem Strom eingerichtet ist.

12. Automatikgetriebe-Vorrichtung (40) nach Anspruch 11, wobei die Vorrichtung (155) zum Erfassen von Eingriff so eingerichtet ist, dass sie den Eingriff des Eingriffsabschnitts (95) des beweglichen Zahnrades (94) und des Eingriffsabschnitts (93) des feststehenden Zahnrades (92) auf Basis des durch die Vorrichtung (79) zum Erfassen von Strom erfassten Wertes von dem Elektromotor (72) zugeführtem Strom erfasst.

13. Automatikgetriebe-Vorrichtung (40) nach einem der Ansprüche 1 bis 12, die des Weiteren eine Vorrichtung (78) zum Erfassen von Last umfasst, die so eingerichtet ist, dass sie eine auf den Schaltarm (425) wirkende Last erfasst.

14. Automatikgetriebe-Vorrichtung (40) nach Anspruch 13, wobei die Vorrichtung (155) zum Erfassen von Eingriff so eingerichtet ist, dass sie den Eingriff des Eingriffsabschnitts (95) des beweglichen Zahnrades (94) und des Eingriffsabschnitts (93) des feststehenden Zahnrades (92) auf Basis der durch die Vorrichtung (78) zum Erfassen von Last erfassten auf den Schaltarm (425) wirkenden Last erfasst.

15. Fahrzeug (1), das eine Automatikgetriebe-Vorrichtung (40) nach einem der Ansprüche 1 bis 14 umfasst.

## Revendications

1. Dispositif de transmission automatique (40), comprenant :
- un embrayage (46), situé entre un moteur (45) et une roue d'entrainement (23), configuré pour convoyer et couper un couple du moteur (45) à la roue d'entrainement (23) ;
- un actionneur d'embrayage (70) configuré pour engager et désengager l'embrayage (46) ;
- un mécanisme de transmission étagée (43) situé entre l'embrayage (46) et la roue d'entrainement (23) et incluant une came rotative de changement de rapport (421) ; une pluralité de pignons fixes (92) incluant des parties d'engagement (93) et non mobiles avec la rotation de la came de changement de rapport (421) ; des pignons mobiles (94) incluant des parties d'engagement (95) susceptibles d'être engagées avec les parties d'engagement (93) des pignons fixes (92) et mobiles de façon à approcher ou être éloignés des pignons fixes (92) avec la rotation de la came de changement de rapport (421) ; et un bras de changement de rapport (425) mobile de façon à aller et venir entre une position neutre et une position de changement de position de pignon ; dans laquelle, lorsque le bras de changement de rapport (425) est déplacé de la position neutre à la position de changement de position de pignon, la came de changement de rapport (421) est entrainée en rotation et un changement de position de pignon, par lequel une combinaison d'un pignon mobile (94) et d'un pignon fixe (92) engagés l'un avec l'autre est changée, est effectué ;
- un actionneur de changement de rapport (72) configuré pour entrainer le bras de changement de rapport (425) ;
- un dispositif de détection d'état d'embrayage (105) configuré pour détecter un état de l'embrayage (46) ;
- un dispositif de détection d'engagement (155) configuré pour détecter un engagement de la partie d'engagement (95) du pignon mobile (94) et de la partie d'engagement (93) du pignon fixe (92) ;
- un dispositif de commande d'actionneur d'embrayage (135) configuré pour, au moment du changement de position de pignon, commander l'actionneur d'embrayage (70) de sorte que l'embrayage (46) soit désengagé, soit mis dans un état de demi-embrayage, puis engagé ; et
- un dispositif de commande d'actionneur de changement de rapport (140) configuré pour commander l'actionneur de changement de rapport (72) ;
- **caractérisé en ce que**, au moment du changement de position de pignon,
- lorsque, après que la partie d'engagement (95) du pignon mobile (94) soit mise en engagement avec la partie d'engagement (93) du pignon fixe (92), il est détecté par le dispositif de détection d'engagement (155) que l'engagement n'a pas été maintenu pendant une durée de temps prescrite tandis que l'embrayage (46) est dans un état de demi-embrayage, le dispositif de commande d'actionneur de changement de rapport (140) est configuré pour donner un force d'entrainement, continuellement ou à nouveau, au bras de changement de rapport (425) de façon à déplacer le bras de changement de rapport (425) de la position neutre vers la position de changement de position de pignon ; et
- lorsqu'il est détecté par le dispositif de détection d'engagement (155) que l'engagement de la partie d'engagement (95) du pignon mobile (94) et de la partie d'engagement (93) du pignon fixe (92) a été maintenu pendant la durée de temps prescrite tandis que l'embrayage (46) est dans un état de demi-embrayage, le dispositif de commande d'actionneur de changement de rapport (140) est configuré pour ramener le bras de changement de rapport (425) à la position neutre.

2. Dispositif de transmission automatique (40) selon la revendication 1, dans lequel, lorsqu'il est détecté par le dispositif de détection d'engagement (155) que l'engagement de la partie d'engagement (95) du pignon mobile (94) est mise en engagement avec la partie d'engagement (93) du pignon fixe (92), le dispositif de commande d'actionneur d'embrayage (135) est configuré pour commander l'actionneur d'embrayage (70) de façon à engager l'embrayage (46), qui a été désengagé, après avoir mis l'embrayage (46) dans un état de demi-embrayage.

3. Dispositif de transmission automatique (40) selon les revendications 1 ou 2, dans lequel :
- l'embrayage (46) inclut un corps de rotation côté entrainement (445) auquel le couple du moteur (45) est convoyé et un corps de rotation côté subordonné (449) susceptible de venir au contact et d'être séparé du corps de rotation côté entrainement (445) et est configuré pour être engagé et désengagé lorsque le corps de rotation côté entrainement (445) et le corps de rotation côté subordonné (449) viennent au contact et sont séparés l'un de l'autre ;
- au moment du changement de position de pignon du mécanisme de transmission (43), le dispositif de commande d'actionneur d'embrayage (135) est configuré pour effectuer une commande de demi-embrayage consistant à faire en sorte que le corps de rotation côté entrainement (445) et le corps de rotation côté subordonné (449) approche l'un de l'autre à une première vitesse relative de sorte que le corps de rotation côté entrainement (445) et le corps de rotation côté subordonné (449) tournent l'un par rapport à l'autre tout en étant en contact l'un avec l'autre, et est configuré pour effectuer, après la commande de demi-embrayage, une commande d'achèvement d'engagement consistant à faire en sorte que le corps de rotation côté entrainement (445) et le corps de rotation côté subordonné (449) approche l'un de l'autre à une seconde vitesse relative, plus élevée que la première vitesse relative, jusqu'à ce que le corps de rotation côté entrainement (445) et le corps de rotation côté subordonné (449) tournent intégralement ensemble ; et
- lorsqu'il est détecté par le dispositif de détection d'engagement (155) que l'engagement de la partie d'engagement (95) du pignon mobile (94) et de la partie d'engagement (93) du pignon fixe (92) a été maintenu pendant la durée de temps prescrite tandis que la commande de demi-embrayage est effectuée, le dispositif de commande d'actionneur de changement de rapport (140) est de préférence configuré pour déplacer le bras de changement de rapport (425) vers la position neutre avant que la commande de demi-embrayage soit finie.

4. Dispositif de transmission automatique (40) selon l'une quelconque des revendications 1 à 3, dans lequel, lorsqu'il est détecté par le dispositif de détection d'engagement (155) que l'engagement de la partie d'engagement (95) du pignon mobile (94) et de la partie d'engagement (93) du pignon fixe (92) a été maintenu pendant la durée de temps prescrite tandis que la commande de demi-embrayage est effectuée, le dispositif de commande d'actionneur de changement de rapport (140) est configuré pour ramener le bras de changement de rapport (425) vers la position neutre avant que la commande de demi-embrayage soit finie.

5. Dispositif de transmission automatique (40) selon l'une quelconque des revendications 1 à 4, comprenant en outre un dispositif de détection de came de changement de rapport (428) configuré pour détecter un angle de rotation de la came de changement de rapport (421).

6. Dispositif de transmission automatique (40) selon la revendication 5, dans lequel le dispositif de détection d'engagement (155) est configuré pour détecter l'engagement de la partie d'engagement (95) du pignon mobile (94) et de la partie d'engagement (93) du pignon fixe (92) en se fondant sur l'angle de rotation de la came de changement de rapport (421) détecté par le dispositif de détection de came de changement de rapport (428).

7. Dispositif de transmission automatique (40) selon l'une quelconque des revendications 1 à 6, comprenant en outre un dispositif de détection d'actionneur de changement de rapport (76) configuré pour détecter une position d'opération de l'actionneur de changement de rapport (72).

8. Dispositif de transmission automatique (40) selon la revendication 7, dans lequel le dispositif de détection d'engagement (155) est configuré pour détecter l'engagement de la partie d'engagement (95) du pignon mobile (94) et de la partie d'engagement (93) du pignon fixe (92) en se fondant sur la position d'opération de l'actionneur de changement de rapport (72) détectée par le dispositif de détection d'actionneur de changement de rapport (76).

9. Dispositif de transmission automatique (40) selon l'une quelconque des revendications 1 à 8, comprenant en outre un dispositif de détection de bras de changement de rapport (435) configuré pour détecter une position d'opération du bras de changement de rapport (425).

10. Dispositif de transmission automatique (40) selon la revendication 9, dans lequel le dispositif de détection d'engagement (155) est configuré pour détecter l'engagement de la partie d'engagement (95) du pignon mobile (94) et de la partie d'engagement (93) du pignon fixe (92) en se fondant sur la position d'opération du bras de changement de rapport (425) détectée par le dispositif de détection de bras de changement de rapport (435).

11. Dispositif de transmission automatique (40) selon l'une quelconque des revendications 1 à 10, dans lequel :
- l'actionneur de changement de rapport (72) est un moteur électrique (72) ; et
- le dispositif de transmission automatique (40) comprend en outre un dispositif de détection de courant (79) configuré pour détecter une valeur du courant alimentant le moteur électrique (72).

12. Dispositif de transmission automatique (40) selon la revendication 11, dans lequel le dispositif de détection d'engagement (155) est configuré pour détecter l'engagement de la partie d'engagement (95) du pignon mobile (94) et de la partie d'engagement (93) du pignon fixe (92) en se fondant sur la valeur du courant alimentant le moteur électrique (72) détectée par le dispositif de détection de courant (79).

13. Dispositif de transmission automatique (40) selon l'une quelconque des revendications 1 à 12, comprenant en outre un dispositif de détection de charge (78) configuré pour détecter une charge appliquée au bras de changement de rapport (425).

14. Dispositif de transmission automatique (40) selon la revendication 13, dans lequel le dispositif de détection d'engagement (155) est configuré pour détecter l'engagement de la partie d'engagement (95) du pignon mobile (94) et de la partie d'engagement (93) du pignon fixe (92) en se fondant sur la charge appliquée au bras de changement de rapport (425) détectée par le dispositif de détection de charge (78).

15. Véhicule (1), comprenant un dispositif de transmission automatique (40) selon l'une quelconque des revendications 1 à 14.
